# EUROPÄISCHE PATENTANMELDUNG

(11) **EP 1 486 121 A2**
(43) Veröffentlichungstag der Anmeldung: **15.12.2004**
(21) Anmeldenummer: 04013201.1
(22) Anmeldetag: 04.06.2004
(51) Int. Cl.: A21B 3/07

(54) **Beschickungsvorrichtung für einen Backofen sowie Backanlage mit einer derartigen Beschickungsvorrichtung und einem Backofen**

(30) Priorität: 10.06.2003 DE 10326481; 06.08.2003 DE 10336457; 15.12.2003 DE 10358541
(71) Anmelder: Werner & Pfleiderer Lebensmitteltechnik GmbH, 91550 Dinkelsbühl (DE)
(72) Erfinder: Dannenhauer, Bernd, 91550 Dinkelsbühl (DE); Blümel, Frank, 91614 Möchsroth (DE); Schmidt, Thomas, 97340 Martinsheim (DE)
(74) Vertreter: Hofmann, Matthias, Dr.

(57) **Zusammenfassung**

Eine Beschickungsvorrichtung für einen Backofen (8) weist eine Bevorratungseinrichtung (9) für Backgut (4) und eine Hub-Fördereinrichtung (34) für das Backgut (4) auf. Die Bevorratungseinrichtung (9) hat eine Beschickungsöffnung, mindestens einen Vorratsbehälter (10, 23) und eine unterhalb der Beschickungsöffnung angeordnete Vorrats-Ausgabeöffnung. Ein untenliegender Förder-Eingangsabschnitt (37) der Hub-Fördereinrichtung (34) steht mit der Ausgabeöffnung der Bevorratungseinrichtung in Förderverbindung unter Schwerkrafteinfluss. Eine Backanlage (1) mit einer derartigen Beschickungsvorrichtung (9) ist bequem bedienbar und bedarf nicht der ständigen Präsenz einer Bedienperson. Ferner kann sie optisch ansprechend gestaltet sein.

## Beschreibung

Die Erfindung betrifft eine Beschickungsvorrichtung für einen Backofen sowie eine Backanlage mit einer derartigen Beschickungsvorrichtung und einem Backofen.

In Backfilialen besteht das Bedürfnis nach einer Backanlage, die einerseits mit möglichst geringem Aufwand und möglichst bequem zu bedienen ist und die andererseits den Backvorgang selbst dem Ladenpublikum zugänglich macht. Backanlagen, die derzeit in Backfilialen zum Einsatz kommen, haben mindestens in einer der angesprochenen Richtungen noch Verbesserungspotential. So ist das Beschicken eines Ladenbackofens oftmals umständlich oder erfordert eine praktisch ständige Präsenz einer Bedienperson. Zudem sind die bekannten Backanlagen optisch nicht immer sehr ansprechend.

Es ist daher eine Aufgabe der vorliegenden Erfindung, eine Backanlage und insbesondere eine Beschickungsvorrichtung für diese derart weiterzubilden, dass einerseits ein Backofen der Backanlage effizient betrieben werden kann und andererseits die Möglichkeit einer ästhetisch ansprechenden Backanlage gegeben ist.

Diese Aufgabe ist erfindungsgemäß gelöst durch eine Beschickungsvorrichtung mit den Merkmalen des Anspruchs 1.

Erfindungsgemäß wurde erkannt, dass die Beschickung eines Backofens stark vereinfacht werden kann, wenn die Beschickungsvorrichtung mit einer Hub-Fördereinrichtung ausgestaltet wird. Dies ermöglicht eine moderate Beschickungshöhe, sodass die Beschickung beispielsweise nicht über Kopf erfolgen muss. Die Bevorratungseinrichtung ermöglicht zudem einen längeren Betrieb einer Backanlage mit einer derartigen Beschickungsvorrichtung ohne die ständige Notwendigkeit der Präsenz einer Bedienperson. Förderelemente zur Förderung unter Schwerkrafteinfluss sind oftmals konstruktiv weniger aufwendig als Förderelemente, bei denen auf eine Förderung unter Schwerkrafteinfluss verzichtet wird. Bei der Förderung unter Schwerkrafteinfluss muss nicht ausschließlich auf die Schwerkraft vertraut werden, das heißt der Schwerkrafteinfluss kann auch zur Unterstützung der Förderfunktion des Förderelements herangezogen werden.

Eine Mehrzahl von Vorratsbehältern nach Anspruch 2 gewährleistet einerseits eine Bevorratungseinrichtung mit hoher Aufnahmekapazität, wobei andererseits die Füllhöhe innerhalb eines Vorratsbehälters nicht zu groß gewählt werden muss. Eine Beschädigung von Backgut durch die Last darüber liegenden Backguts wird damit verhindert.

Eine Bevorratungs-Fördereinrichtung nach Anspruch 3 gewährleistet eine definierte Förderung des Backguts von der Bevorratungseinrichtung hin zur Hub-Fördereinrichtung.

Ein Vorratsbehälter nach Anspruch 4 ist definiert befüll- und entleerbar.

Trennwände nach Anspruch 5 gewährleisten eine einfache Förderung des Backguts innerhalb des Vorratsbehälters.

Mindestens ein Vorratsbehälter nach Anspruch 6 erleichtert das Befüllen der Bevorratungseinrichtung. Backgut muss nicht zwischen Behältern umgefüllt werden, sondern es kann der ganze Vorratsbehälter ausgetauscht werden.

Eine Förderschnecke nach Anspruch 7 gewährleistet eine definierte Förderung des Backguts, die besonders für eine Vereinzelung vorteilhaft ist. Alternativ zu einer Förderschnecke kann als Hub-Fördereinheit auch ein anderes Fördermittel eingesetzt sein. Ein Beispiel für ein derartiges Fördermittel ist ein umlaufendes Förderband, dessen Förderfläche so geneigt ist, dass das Backgut zwischen dem Förder-Eingangsabschnitt und dem Förder-Ausgangsabschnitt eine Höhendifferenz überwindet. Die Förderfläche kann hierbei z. B. als Bürstenfläche ausgestaltet sein. Die Förderfläche kann insbesondere auch 90° zur Horizontalen geneigt sein, also vertikal angeordnet sein. In einem derartigen Fall muss sichergestellt sein, dass das Backgut während der Förderung auf der Förderfläche mit dieser in Kontakt bleibt. Dies kann durch ein starres Leitblech geschehen, mit welchem das geförderte Backgut auf der der Förderfläche gegenüberliegenden Seite in Kontakt kommt. Anstelle des Leitblechs kann als Leitband auch ein zweites Förderband eingesetzt sein, dessen Förderfläche synchron mit derjenigen der Hub-Fördereinrichtung läuft, sodass das Backgut zwischen beiden Förderflächen vertikal transportiert wird. Vor der Hub-Förderung kann das Backgut, zum Beispiel durch eine Zentrifuge, vereinzelt werden.

Eine Positioniervorrichtung nach Anspruch 8 gewährleistet eine automatische und definierte Befüllung von Aufnahmeabschnitten des Backofens.

Ein Positionierrahmen nach Anspruch 9 ist konstruktiv unaufwendig herstellbar. Zudem gewährleistet er eine sichere Einzelpositionierung des Backguts relativ zu entsprechenden Aufnahmeabschnitten des Backofens.

Mit einem Antriebsmotor nach Anspruch 10 dient die Positioniereinheit gleichzeitig als Ausgabeabschnitt. Dies vereinfacht den Aufbau der Beschickungsvorrichtung.

Ein Antriebsmotor nach Anspruch 11 dient neben der Umstellung von der Positionier- in die Übergabestellung der Positionierung des Backguts. Hierdurch wird der Aufbau der Beschickungsvorrichtung vereinfacht.

Eine Beschickungsvorrichtung nach Anspruch 12 lässt sich modular aufbauen. Das Lagervolumen der einzelnen Vorratsbehälter kann so dimensioniert sein, dass das gelagerte Backgut durch das Gewicht von darauf lastendem Backgut nicht beschädigt wird.

Ein Vorratsbehälter nach Anspruch 13 gewährleistet eine mit einfachen Mitteln steuerbare Entleerung.

Ein Vorratsbehälter nach Anspruch 14 ermöglicht einen sicheren und schonenden Transport des gelagerten Backguts.

Mit einer Bevorratungs-Fördereinrichtung nach Anspruch 15 ist eine betriebssichere Vereinzelung des Backguts gegeben.

Ein Antrieb der Bevorratungs-Fördereinrichtung nach Anspruch 16 bzw. ein Leitblech nach Anspruch 17 ermöglicht einen definierten Transport des Backguts hin zur Vorrats-Ausgabeöffnung.

Eine Bevorratungs-Fördereinrichtung mit einem Innenabschnitt nach Anspruch 18 vermeidet die Gefahr eines Backgut-Staus im Förderbehälter.

Ein Sensor nach Anspruch 19 erlaubt eine Durchsatzmessung der Beschickungsvorrichtung, wobei der Durchsatz zur Bedarfssteuerung einzelner Komponenten in einer zentralen Steuereinrichtung ausgewertet werden kann.

Ein Behälterträger nach Anspruch 20 vereinfacht das Befüllen der Bevorratungseinrichtung. Dieses muss nicht am Ort der sonstigen Backanlage durchgeführt werden. Zudem kann eine größere Anzahl von Behälterträgern vorgehalten werden, so dass der Wechsel eines leeren Behälterträgers durch einen befüllten Behälterträger schnell erfolgen kann.

Eine Ausgestaltung der Backanlage nach Anspruch 21 führt zu einer vereinfachten Bedienung der Bevorratungseinrichtung.

Mit einer Ausgabe-Schiebewand nach Anspruch 22 ist ein einfaches und sicheres Entleeren der Vorratsbehälter möglich.

Eine Ausgabe-Schiebewand nach Anspruch 23 lässt sich Platz sparend zwischen der Offen- und der Schließstellung verlagern.

Eine Ausgabe-Schiebewand nach Anspruch 24 ermöglicht eine kompakte Ausführung eines Behälterträgers mit einer Mehrzahl von Vorratsbehältern.

Ein Zwischenbehälter nach Anspruch 25 verhindert ein unerwünschtes Überfüllen der Bevorratungs-Fördereinrichtung. Stauungen in der Bevorratungs-Fördereinrichtung werden so verhindert.

Mit einem Zwischenbehälter nach Anspruch 26 lässt sich auf einfache Weise die Abgabemenge aus dem Zwischenbehälter vorgeben.

Ein Zwischenbehälterboden nach Anspruch 27 lässt sich unaufwändig herstellen.

Eine Bevorratungs-Fördereinrichtung nach Anspruch 28 ermöglicht ein sicheres Fördern vereinzelter Stücke Backguts.

Ein Vereinzelungs-Abweiser nach Anspruch 29 führt zu einem sicheren Vereinzeln des Backguts. Dieses wird auch dann vereinzelt, wenn die einzelnen Stücke zum Verkleben neigen.

Ein Sensor nach Anspruch 30 erhöht die Vereinzelungssicherheit weiter.

Ein Vereinzelungs-Abweiser nach Anspruch 31 führt zu einem sicheren Transport des Backguts hin zur Hub-Fördereinrichtung.

Eine Positioniereinrichtung nach Anspruch 32 erzeugt einen Satz Backgut vor der Hub-Förderung. Dies ermöglicht eine Hub-Fördereinrichtung mit erhöhter Förderleistung.

Ein Ausgabeschieber nach Anspruch 33 ermöglicht ein sicheres Positionieren der zu einem Satz gehörenden Stücke Backgut.

Eine Hub-Fördereinrichtung nach Anspruch 34 lässt sich mit relativ geringem Aufwand realisieren und ermöglicht ein schonendes Fördern des Backguts.

Die Vorteile einer Backanlage nach Anspruch 35 entsprechen den oben im Zusammenhang mit der Beschickungsvorrichtung angesprochenen Vorteilen.

In einem Entnahmebehälter nach Anspruch 36 lassen sich verschiedene Typen von Backgut, die im Backofen gebacken werden, sortiert in die jeweiligen Entnahmefächer abgeben.

Unabhängig von der Ausgestaltung der Beschickungsvorrichtung ist noch ein weiterer wesentlicher Aspekt der Erfindung die Weiterbildung einer Backanlage derart, dass genaue Verbrauchswerte der Backanlage, wie z. B. die Menge der in der Backanlage verarbeitete Stücke Brötchen pro Tag oder Woche, die Verteilung der verarbeiteten Anzahlen und Arten von Backgut, und die gesamte Warenwirtschaft der Backanlage ermittelt bzw. abgewickelt werden kann.

Ausführungsbeispiele der Erfindung werden nachfolgend anhand der Zeichnung näher erläutert. In dieser zeigen:
- Fig. 1: eine perspektivische Ansicht einer Backanlage mit einem Backofen und einer Beschickungsvorrichtung;
- Fig. 2: eine perspektivische Ansicht der Backanlage von Figur 1 mit abgenommenem Gehäuse;
- Fig. 3: eine weitere perspektivische Ansicht der Backanlage;
- Fig. 4: einen vertikalen Schnitt durch die Backanlage senkrecht zur Rotationsachse einer Backtrommel des Backofens in perspektivischer Ansicht;
- Fig. 5: einen Schnitt wie in Figur 4 in Seitenansicht;
- Fig. 6: eine weitere perspektivische Ansicht des Backofens, wobei eine Vereinzelungs-Positioniereinheit aus einer Positionierstellung in eine Übergabestellung verlagert ist;
- Fig. 7: eine perspektivische Ansicht einer alternativen Bevorratungseinrichtung für die Backanlage nach den Figuren 1 bis 6;
- Fig. 8: einen vertikalen Schnitt durch die Bevorratungseinrichtung nach Figur 7 parallel zu einer senkrecht zu Fachböden von Vorratsbehältem verlaufenden Mittelebene der Bevorratungseinrichtung;
- Fig. 9: eine perspektivische Ansicht einer Bevorratungs-Fördereinrichtung der Bevorratungseinrichtung nach den Figuren 7 und 8 zur Förderung des Backguts hin zur Vorrats-Ausgabeöffnung;
- Fig. 10: einen Schnitt durch die Bevorratungs-Fördereinrichtung nach Figur 9 senkrecht zur Schnittebene der Figur 8;
- Fig. 11: eine weitere perspektivische Ansicht der Bevorratungs-Fördereinrichtung der Figuren 9 und 10;
- Fig. 12: eine Aufsicht auf die Bevorratungs-Fördereinrichtung der Figuren 9 bis 11; und
- Fig. 13: eine Unteransicht der Bevorratungs-Fördereinrichtung der Figuren 9 bis 12;
- Fig. 14: eine perspektivische Ansicht einer alternativen Backanlage mit einem Backofen, einer Beschickungsvorrichtung für diesen und einem dem Backofen nachgelagerten Entnahmebehälter;
- Fig. 15: eine weitere perspektivische Ansicht der Backanlage nach Fig. 14 mit geöffneter, den Entnahmebehälter enthaltender Fronttür;
- Fig. 16: eine zu Fig. 14 ähnliche Darstellung der Backanlage, wobei die Fronttür sowie ein fahrbarer Behälterträger einer Bevorratungseinrichtung der Backanlage weggelassen ist;
- Fig. 17: einen vertikalen Längsschnitt durch die Backanlage nach Fig. 14;
- Fig. 18: eine zu Fig. 16 ähnliche Darstellung der Backanlage ohne Behälterträger und mit weggelassenen Seitenwänden;
- Fig. 19: einen Teilausschnitt aus einer zu Fig. 18 ähnlichen Darstellung im Bereich einer Bevorratungs-Fördereinrichtung;
- Fig. 20: einen der beiden Behälterträger der Backanlage nach Fig. 14 in perspektivischer Ansicht mit geschlossenen Vorratsbeschickungsöffnungen;
- Fig. 21: eine zu Fig. 19 ähnliche Ansicht, wobei eine Befüllklappe einer Vorratsbeschickungsöffnung in Offenstellung dargestellt ist;
- Fig. 22: den Behälterträger nach Fig. 20 in einem vertikalen Längsschnitt;
- Fig. 23: eine Bevorratungs-Fördereinrichtung der Backanlage nach den Figuren 14 bis 21, die eine Alternative der Bevorratungs-Fördereinrichtung nach Fig. 9 darstellt, in perspektivischer Ansicht;
- Fig. 24: eine Aufsicht auf die Bevorratungs-Fördereinrichtung nach Fig. 23, wobei ein Zwischenbehälter weggelassen und ein Vereinzelungs-Abweiser in einer Durchgangsstellung dargestellt ist;
- Fig. 25: eine zu Fig. 24 ähnliche Darstellung der Bevorratungs-Fördereinrichtung mit dem Vereinzelungs-Abweiser in Abweisestellung;
- Fig. 26 und 27: perspektivisch den Zwischenbehälter der Bevorratungs-Fördereinrichtung nach Fig. 23 in zwei verschiedenen Abgabestellungen eines Zwischenbodens;
- Fig. 28: eine Ausschnittsvergrößerung aus Fig. 10, wobei Tragrinnen eines Förderbandes in einer unteren Beschickungsstellung dargestellt sind;
- Fig. 29: vergrößert einen Vereinzelungs-Abweiser der Bevorratungs-Fördereinrichtung nach Fig. 23;
- Fig. 30: vergrößert einen Ausgabeschieber der Bevorratungs-Fördereinrichtung nach Fig. 23.

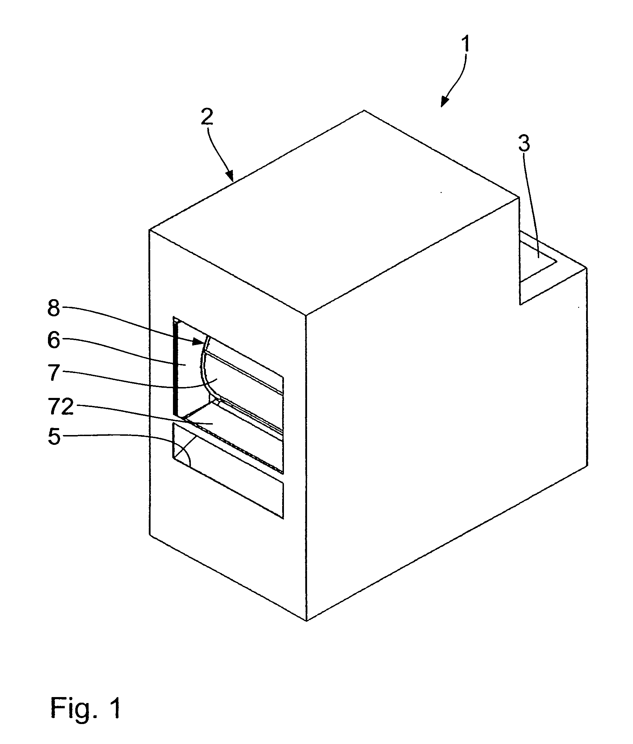

In Figur 1 ist eine perspektivische Ansicht einer Backanlage 1 dargestellt. Ein Gehäuse 2 der Backanlage 1 weist eine Beschickungsöffnung 3 zur Beschickung der Backanlage 1 mit zu backendem Backgut 4, z. B. mit teilgefrorenen bzw. teilgebackenen Brötchen, sowie eine Ausgabeöffnung 5 zur Ausgabe gebackenen Backguts 3 auf. Ferner hat das Gehäuse 2 ein Sichtfenster 6, welches den Blick auf eine horizontal angeordnete Backtrommel 7 eines Backofens 8 der Backanlage 1 freigibt.

Die Beschickungsöffnung 3 hat eine Höhe, die bequem zur Befüllung der Backanlage 1 durch eine Bedienperson geeignet ist. Von der Ausgabeöffnung 5 aus fällt das gebackene Backgut 4 in einen nicht dargestellten Tragbehälter.

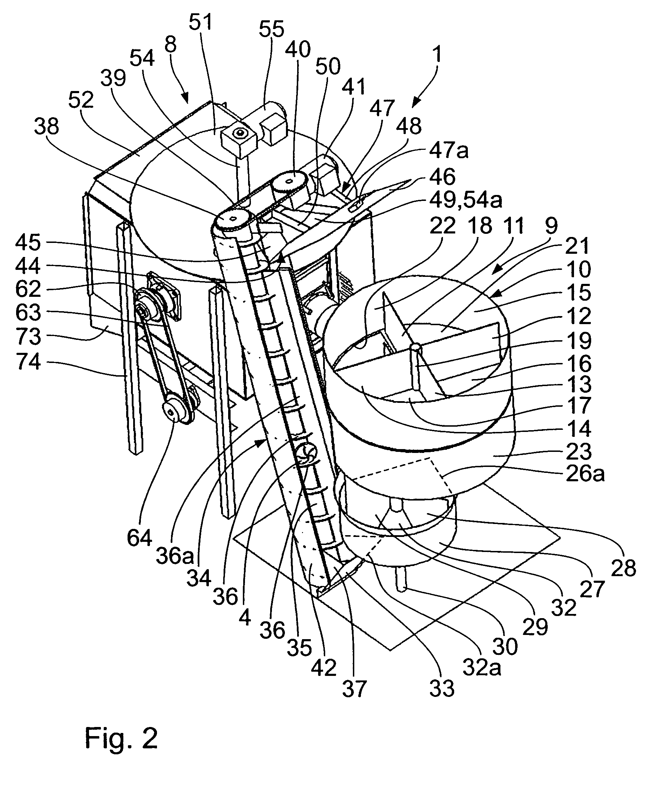

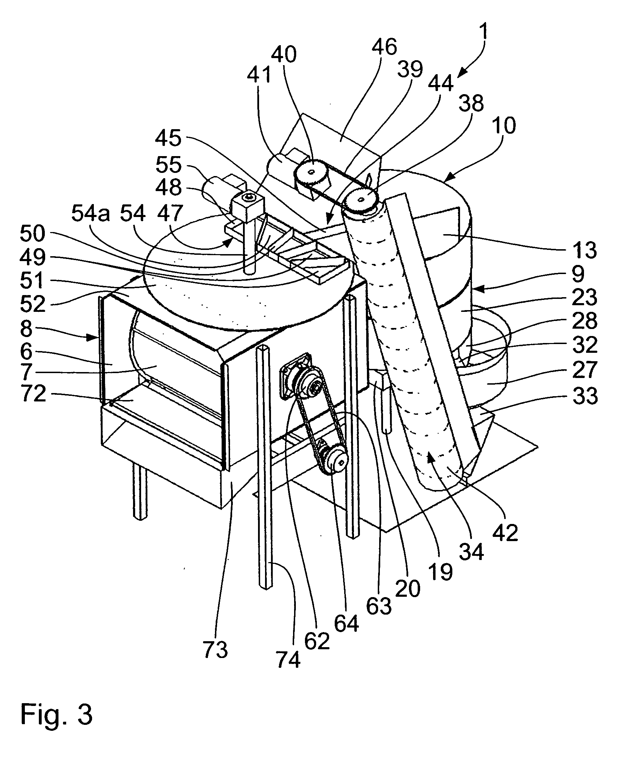

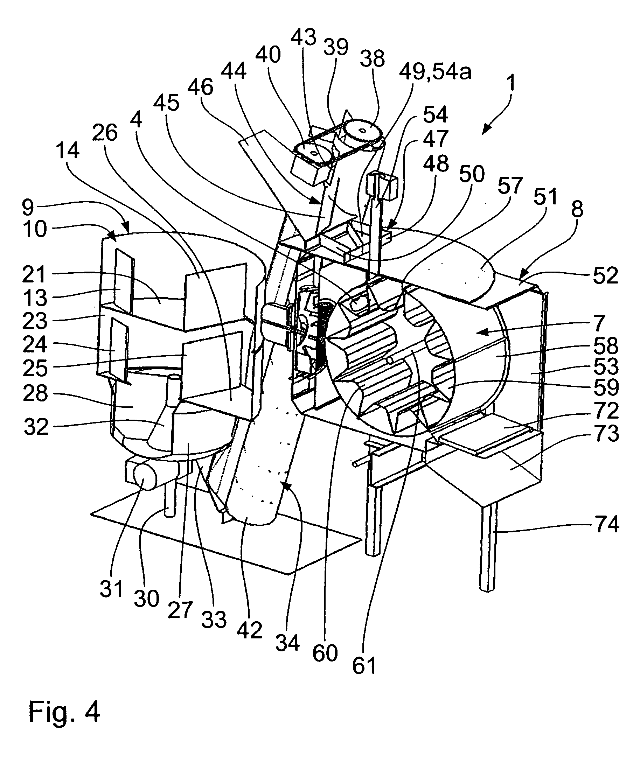

Die Figuren 2 bis 6 zeigen interne Details der Backanlage 1, wobei das Gehäuse 2 weggelassen ist. Der Beschickungsöffnung 3 nachgeordnet ist eine Bevorratungseinrichtung 9 der Backanlage 1, die als Bevorratungskarussell ausgestaltet ist. Die Bevorratungseinrichtung 9 kann isoliert oder gekühlt sein, sodass das Backgut 4 in der Bevorratungseinrichtung 9 z. B. gefroren bleibt. Bevorzugt ist eine derartige gekühlte Bevorratungseinrichtung 9 geeignet gegenüber der sonstigen Backanlage 1 wärmeisoliert. Die Bevorratungseinrichtung 9 ist so dimensioniert, dass die Backanlage 1 mindestens eine Stunde lang ohne Zutun einer Bedienperson betrieben werden kann. Der Beschickungsöffnung 3 direkt nachgeordnet ist ein erster, oberer zylindrischer Vorratsbehälter 10, der nach oben offen ist. Der erste Vorratsbehälter 10 ist durch insgesamt vier von einer zentralen Längsachse des Vorratsbehälters 10 aus radial verlaufenden Trennwänden 11 bis 14 in vier Vorratsektoren 15 bis 18 unterteilt. Die Trennwände 11 bis 14 sind über eine längs der Längsachse des ersten Vorratsbehälters 10 verlaufende Antriebswelle 19 drehfest miteinander verbunden, die über einen in Figur 3 teilweise sichtbaren Antriebsmotor 20 in Rotation versetzt werden kann.

Ein Behälterboden 21 des Vorratsbehälters 10 weist im Bereich des Vorratssektors 18, der in horizontaler Richtung der Beschickungsöffnung 3 abgewandt angeordnet ist, eine sektorförmige Durchtrittsöffnung 22 auf. Bezogen auf das Gehäuse 2 der Backanlage 1 ist der Behälterboden 21 starr, dreht sich also bei einer Rotation der Antriebswelle 19 nicht mit. Die Durchtrittsöffnung 22 schafft einen Durchgang vom ersten Vorratsbehälter 10 zu einem zweiten, unteren zylindrischen Vorratsbehälter 23 der Bevorratungseinrichtung 9. Der zweite Vorratsbehälter 23 fluchtet zum ersten Vorratsbehälter 10 und ist wie dieser aufgebaut.

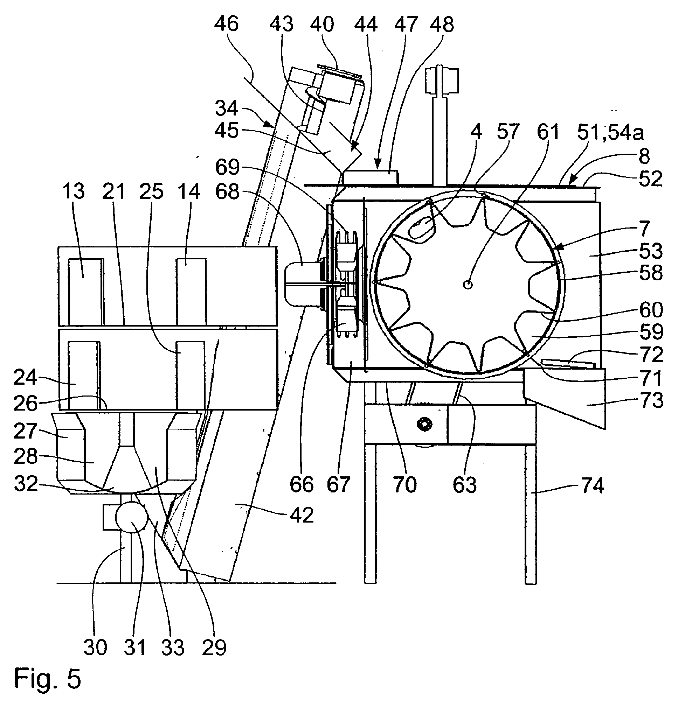

In Figur 5 ist dargestellt, dass auch der untere Vorratsbehälter 23 Trennwände zur Unterteilung von diesem in Vorratssektoren aufweist, wobei in Figur 5 nur zwei der insgesamt vier Trennwände, nämlich die Trennwände 24, 25, dargestellt sind. Die Trennwände des zweiten Vorratsbehälters 23 sind ebenfalls drehfest über eine nicht dargestellte magnetische Kupplung schaltbar mit der Antriebswelle 19 verbunden. Die vier Trennwände des unteren Vorratsbehälters 23 liegen dabei genau unterhalb der Trennwände 11 bis 14 des oberen Vorratsbehälters 10, fluchten also mit diesen. Daher fluchten auch die Vorratssektoren 15 bis 18 des oberen Vorratsbehälters 10 mit denjenigen des unteren Vorratsbehälters 23. Durch entsprechende Kupplungen kann eine Drehbarkeit der vier Trennwände des unteren Vorratsbehälters 23 unabhängig von der Drehbarkeit der Trennwände 11 bis 14 des oberen Vorratsbehälters 10 gewährleistet werden.

Auch der untere Vorratsbehälter 23 weist einen Behälterboden 26 mit einer in Figur 2 gestrichelt angeordneten sektorförmigen Durchtrittsöffnung 26a auf. Die Durchtrittsöffnung 22 im Behälter 21 des oberen Vorratsbehälters 10 ist dabei um einen Vorratssektor in Drehrichtung der Antriebswelle 19 versetzt gegenüber der Durchtrittsöffnung 26a im unteren Vorratsbehälter 23 angeordnet. Die Durchtrittsöffnung 26a im unteren Vorratsbehälter 23 schafft eine Verbindung zwischen diesem und einem Förderbehälter 27 der Bevorratungseinrichtung 9.

Der Förderbehälter 27 ist unter dem unteren Vorratsbehälter 23 angeordnet und hat eine im Wesentlichen zylindrische Form. Im Förderbehälter 27 laufen zwei ebene Förderschaufeln 28, 29, die radial zu einer Längsachse des Förderbehälters 27 verlaufen und drehfest mit einer längs dieser Längsachse verlaufenden weiteren Antriebswelle 30 verbunden sind. Letztere kann mittels eines Antriebsmotors 31 in Rotation versetzt werden. Im Förderbehälter 27 ist an der Antriebswelle 30 ein sich zum Boden des Förderbehälters 27 hin erweiternder Ablenk-Konus 32 angebracht. Im Boden des Förderbehälters 27 ist eine in Figur 2 gestrichelt angedeutete Ausgabeöffnung 32a ausgeführt, an die sich eine Rutsche 33 anschließt, welche eine Förderverbindung der Bevorratungseinrichtung 9 mit einer Hub-Fördereinrichtung 34 darstellt. Die Hub-Fördereinrichtung 34 weist eine aufrecht geneigt stehende Förderschnecke 35 auf, deren Gewindegänge 36 einen Abstand zueinander aufweisen, der einer typischen Ausdehnung des Backguts 4 entspricht. Der Abstand zwischen zwei benachbarten Gewindegängen 36 ist dabei etwas größer als die typische Ausdehnung des Backguts 4, sodass sichergestellt ist, dass ein Stück Backgut 4 sicher gefördert werden kann, aber es nicht möglich ist, dass zwei längs der Längsachse der Förderschnecke 35 übereinander liegende Stücke Backgut 4 zwischen zwei benachbarten Gewindegängen 36 gefördert werden. Längs des von der Förderschnecke 35 vorgegebenen gewendelten Förderwegs in der Hub-Fördereinrichtung 34 werden die Stücke Backgut 4 daher aufgereiht hintereinander gefördert. Zur Unterstützung der Förderfunktion der Förderschnecke 35 arbeitet mit dieser eine Bürstenfläche 36a zusammen, welche ein Weiterdrehen des Backguts 4 verhindert.

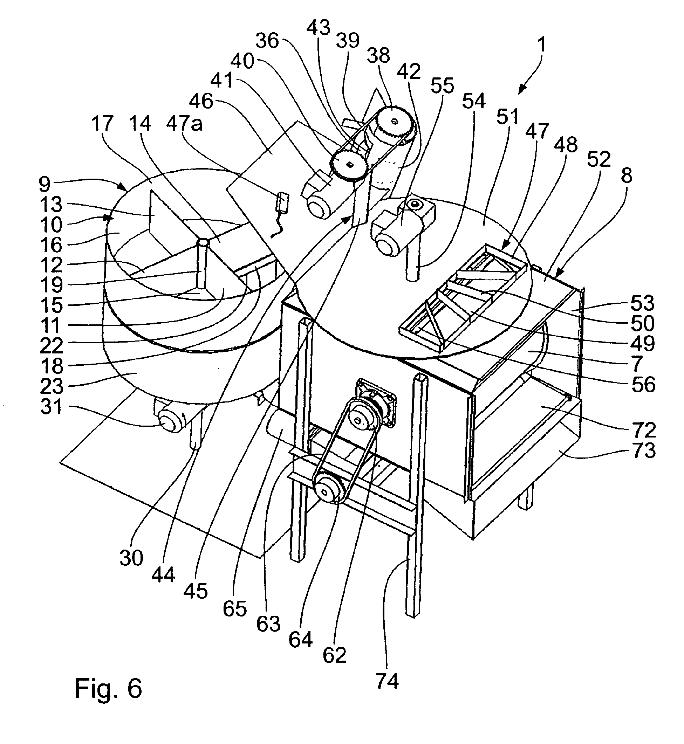

Ein untenliegender Förder-Eingangsabschnitt 37 ist am unteren Ende der Rutsche 33 angeordnet. Am gegenüberliegenden Ende weist die Förderschnecke 35 ein Zahnrad 38 auf. Über dieses, eine Antriebskette 39 und ein weiteres Zahnrad 40 ist die Förderschnecke 35 um ihre Längsachse mittels eines Antriebsmotors 41 angetrieben. Am oberen Ende der Hub-Fördereinrichtung 34 weist ein die Förderschnecke 35 teilweise umgebendes Gehäuse 42 eine Ausnehmung 43 auf, die einen Förder-Ausgabeabschnitt der Hub-Fördereinrichtung 34 darstellt. An die Ausnehmung 34 schließt sich eine Rutsche 44 aus einem vertikal stehenden Leitblech 45, welches am Gehäuse 42 angeformt ist, und einer ebenfalls angeformten schiefen Ebene 46 an, die hin zum Backofen 8 abfällt. Die Rutsche 44 stellt einen Zugabeabschnitt einer Positioniereinrichtung 47 für einen Satz aus insgesamt fünf Stücken Backgut 4 dar. Die Positioniereinrichtung 47 weist als Positioniereinheit einen Positionierrahmen 48 auf, der in den Figuren 2 bis 5 in einer Positionierstellung und in Figur 6 in einer Übergabestellung dargestellt ist. Beim Rutschen über die Rutsche 44 passieren die einzelnen Stücke Backgut 4 eine Lichtschranke 47a einer Zähleinrichtung, sodass sichergestellt ist, dass dem Positionierrahmen 48 ein kompletter Satz von Stücken Backgut 4 zugeführt wird. Nachdem das letzte Stück Backgut 4, welches einen derartigen Satz komplettiert, die Lichtschranke 47a passiert hat, stoppt eine mit der Lichtschranke 47a verbundene Steuerung automatisch den Antrieb der Förderschnecke 35. Der Positionierrahmen 48 hat eine Mehrzahl von Positionierraufnahmen 49 für jeweils ein Stück Backgut, die voneinander durch Positionier-Trennwände 50 getrennt sind. Der Positionierrahmen 48 ist drehfest mit einem Drehteller 51 verbunden, der unter geringem Abstand parallel zu einer oberen Gehäusewand 52 eines Innengehäuses 53 des Backofens 8 angeordnet ist. Der Drehteller 51 ist seinerseits drehfest mit einer längs seiner Mittelachse verlaufenden Antriebswelle 54 verbunden, die mittels eines Antriebsmotors 55 angetrieben wird. Letzterer ist in nicht dargestellter Weise fest mit einem Rahmen der Backanlage 1 verbunden.

Die Positionieraufnahmen 49 haben keinen Boden. In der Positionierstellung wird der Boden der Positionieraufnahmen 49 gebildet durch einen zweiten Drehteller 54a zwischen dem ersten Drehteller 51 und der Gehäusewand 52. Der zweite Drehteller 54a ist um die Längsachse der Antriebswelle 54 unabhängig vom ersten Drehteller 51 drehbar. Der zweite Drehteller 54a ist mittels einer nicht dargestellten Magnetkupplung mit der Antriebswelle 54 verbunden. In der Übergabestellung der Figur 6 fluchtet mit dem Positionierrahmen 48 eine Beschickungsöffnung 56 im zweiten Drehteller 54a und in der oberen Gehäusewand 52. Diese fluchtet in der Übergabestellung mit einer Durchtrittsöffnung 57 in einer äußeren Begrenzungswand 58 der Backtrommel 7. Aufnahmeabschnitte 59 für einzelne Sätze von Backgut 4 sind zur Längsachse der Backtrommel 7 hin, also nach innen, begrenzt durch eine im Querschnitt sternförmige innere Begrenzungswand 60. Die Begrenzungswände 58, 60 sind aus luftdurchlässigen Edelstahldrahtgewebe. Insgesamt hat die Backtrommel 7 elf Aufnahmeabschnitte 59. Die Erstreckung der Durchtrittsöffnung 57 in der äußeren Begrenzungswand 58 in Umfangsrichtung um die Längsachse der Backtrommel 7 entspricht der Erstreckung eines Aufnahmeabschnitts 59 in Umfangsrichtung. Die äußere Begrenzungswand 58 und die innere Begrenzungswand 60 sind unabhängig voneinander um die Längsachse der Backtrommel 7 antreibbar. Hierzu ist eine zentrale Antriebswelle 61 längs der Längsachse der Backtrommel 7 drehfest mit einem Zahnrad 62 und über einen Antriebsriemen 63 und ein weiteres Zahnrad 64 mit einem Antriebsmotor 65 verbunden. Der Antriebsmotor 65 treibt sowohl die innere Begrenzungswand 60 als auch die äußere Begrenzungswand 58 an. Hierzu ist unter dem Backofen 8 parallel zur Antriebswelle 61 eine weitere, nicht dargestellte Antriebswelle mit zwei Kupplungen eingebaut. Die erste dieser Kupplungen dient als Feststellbremse für die äußere Begrenzungswand 58 zum Beispiel beim Befüllen oder Entleeren der Backtrommel 7. Beim Backen laufen beide Begrenzungswände 58, 60 synchron, das heißt die erste Kupplung öffnet und eine zweite Kupplung in der Antriebswelle unter dem Backofen 8 schließt. Auf diese Weise kann dann Drehmoment auf beide Begrenzungswänd 58, 60 über diese zweite Antriebswelle und die Antriebswelle 61 übertragen werden.

Das innere des Innengehäuses 53 stellt einen Backraum des Backofens 8 dar, der mit Umluft beheizt wird, welche den Backraum längs eines vorgegebenen Weges durchtritt. Zur Erzeugung der Umluft dient ein Gebläserotor 66 in einem Rotorgehäuse 67, welches das Innengehäuse 53 zur Bevorratungseinrichtung 9 hin forsetzt. Der Gebläserotor 66 wird mittels eines Antriebsmotors 68 um eine horizontale Achse angetrieben. Zur Erwärmung der Umluft dient eine den Gebläserotor 66 außen koaxial umgebende Heizwendel 69.

In einer bodenseitigen Gehäusewand 70 des Innengehäuses 53 ist eine Durchtrittsöffnung 71 ausgebildet, die sich über die Breite des Innengehäuses 53 parallel zu den Aufnahmeabschnitten 59 erstreck und mittels einer Klappe 72 verschließbar ist. Die Klappe 72 dient der Wärmeisolation des Innengehäuses 53 nach außen. Unterhalb der Durchtrittsöffnung 71 ist ein Ausgabeschacht 73 angeordnet, der hin zur Ausgabeöffnung 5 führt. Das Innengehäuse 53 wird von einem Rahmen mit vier Stützfüßen 74 getragen.

Die Backanlage 1 wird folgendermaßen betrieben: Zunächst wird Backgut 4 in Gebindebehältnissen bereitgestellt, die z. B. 100 Stück Backgut 4 enthalten können. Durch die Beschickungsöffnung 3 wird der obere Vorratsbehälter 10 aus den Gebindebehältnissen mit Backgut 4 befüllt, welches sich in den Vorratssektoren 15 bis 18 verteilt beziehungsweise durch die Durchtrittsöffnung 22 in den zweiten Vorratsbehälter 23 fällt. Anschließend wird das Backgut 4 von der Bevorratungseinrichtung 9 über die Hub-Fördereinrichtung 34 und die Positioniereinrichtung 47 hin zum Backofen 8 gefördert. Hierzu wird der Antriebsmotor 20 aktiviert, sodass die Trennwände 11 bis 14 Backgut 4 aus dem oberen Vorratsbehälter 10 durch die Durchtrittsöffnung 22 in den unteren Vorratsbehälter 23 schaufeln. Da die Trennwände der beiden Vorratsbehälter 10, 23 aufgrund der Kupplungen unabhängig voneinander gedreht werden können, ist es hierdurch möglich, Backgut jederzeit vor einer vollständigen Entleerung der Vorratsbehälter 10, 23 nachzufüllen. Sobald der obere Vorratsbehälter 10 nennenswert entleert ist, kann er durch die Beschickungsöffnung 3 wieder nachgefüllt werden. Backgut 4, welches durch die Durchtrittsöffnung 22 in den unteren Vorratsbehälter 23 fällt, wird durch die Trennwände im unteren Vorratsbehälter 23 hin zur Durchtrittsöffnung 26a im Behälterboden 26 des unteren Vorratsbehälters 23 gefördert und fällt in den Förderbehälter 27. Die versetzte Anordnung der Durchtrittsöffnungen 22, 26a in den Behälterböden 21 und 26 gewährleistet, dass in der Bevorratungseinrichtung 9 eine große Anzahl von Stücken Backgut 4 bevorratet sein kann, da es möglich ist, beide Vorratsbehälter 10, 23 mindestens zu drei Vierteln zu befüllen, nämlich drei von vier Vorratssektoren in den Vorratsbehältern 10 und 23. Die Unterteilung der Bevorratungseinrichtung 9 in die beiden Vorratsbehälter 10, 23 und in den Förderbehälter 27 dient dazu, die maximale Schütthöhe des Backguts 4 zu begrenzen. Eine Beschädigung untenliegender Stücke Backgut 4 durch die darauf lastenden Stücke Backgut ist damit ausgeschlossen. Mit den Förderschaufeln 28, 29 wird das Backgut 4 im Förderbehälter 27 hin zur bodenseitigen Durchtrittsöffnung 32a im Förderbehälter 27 gefördert. Die Förderschaufeln 28, 29 drehen hierbei langsam, sodass nur kleine Portionen von Backgut 4 hin zum Förder-Eingangsabschnitt 37 gelangen. Der Ablenk-Konus 32 gewährleistet hierbei, dass das Backgut 4 im Bodenbereich des Förderbehälters 27 zur Antriebswelle 30 radial ausreichend beabstandet vorliegt, sodass es über die Rutsche 33 hin zum Förder-Eingangsabschnitt 37 der Hub-Fördereinrichtung 34 unter Schwerkrafteinfluss gelangt. Das Zuführen des Backguts zur Hub-Fördereinrichtung 34 erfolgt so, dass zuerst in die Vorratsbehälter 10, 23 eingefülltes Backgut 4 auch zuerst der Förderschnecke 35 zugeführt wird. Dies ist in Bezug auf Hygiene und Qualität des Backguts 4 vorteilhaft.

Mit Hilfe der Förderschnecke 35 der Hub-Fördereinrichtung 34 wird das Backgut 4 dann schräg aufwärts transportiert und vereinzelt, bis es durch die Ausnehmung 43 auf die Rutsche 44 gelangt. Die Förderschnecke 35 wird dabei, gesteuert über die Zähleinrichtung mit der Lichtschranke 47a, über den Antriebsmotor 41 taktweise so angetrieben, dass immer ein Satz von fünf Stücken Backgut 4 während eines Taktes über die Rutsche 44 hin zum Positionierrahmen 48 gelangt. Der Positionierrahmen 48 ist dabei relativ zum unteren Endabschnitt der Rutsche 44 so positioniert, dass erste Stück Backgut 4 eines Satzes in eine der äußersten Positionieraufnahmen 49, z. B. in die im Uhrzeigersinn vorauseilende Positionieraufnahme 49 gelangt. Diese zugeordnete Position stellt eine Einzel-Positionierstellung der Positioniereinrichtung 47 dar. Das in dieser Positionieraufnahme 49 aufgenommene Stück Backgut 4 stellt dann zunächst eine Sperre für das Nachrutschen weiterer Stücke Backgut 4 des Satzes dar. Der zweite Drehteller 54a ist in der Positionierstellung relativ zum ersten Drehteller 51 so positioniert, dass der zweite Drehteller 54a den Boden der Positionieraufnahme 49 bildet. Anschließend wird durch Betätigung des Antriebsmotors 55 der Positionierrahmen 48 ein Stück weit im Uhrzeigersinn um die Antriebswelle 54 weitergedreht, sodass die nächste Positionieraufnahme 49 dem Endabschnitt der Rutsche 44 zugeordnet wird. Der zweite Drehteller 54a wird synchron mitgedreht. Das nächste Stück Backgut 4 des Satzes Backgut gelangt dann von der Rutsche 44 in diese zweite Positionieraufnahme 49. Der Antriebsmotor 55 wird solange schrittweise entsprechend aktiviert, bis alle Positionieraufnahmen 49 des Positionierrahmens 48 jeweils ein Stück Backgut 4 des Satzes tragen. Das Backgut 4 kann auf diese Weise parallel zum Aufnahmeabschnitt 59 ausgerichtet werden.

Anschließend wird der Antriebsmotor 55 betätigt, bis der Positionierrahmen 48 aus der Positionierstellung in die Übergabestellung umgestellt ist. Der zweite Drehteller 54a wird hierbei zunächst synchron mitgedreht. Nachdem der erste Drehteller 51 die Übergabestellung erreicht hat, wird der zweite Drehteller 54a um ca. 90° weitergedreht, sodass die Beschickungsöffnungen 56 im zweiten Drehteller 54a und in der oberen Gehäusewand 52 miteinander fluchten. Das Backgut 4 fällt dann durch die Beschickungsöffnung 56 sowie durch die mit dieser fluchtenden Durchtrittsöffnung 57 in der äußeren Begrenzungswand 58 der Backtrommel 7 in einen ersten Aufnahmeabschnitt 59. Bei der Backanlage 1 stellt der Positionierrahmen 48 daher gleichzeitig eine Positioniereinheit zur Vorgabe von Relativpositionen der Stücke des Satzes Backgut 4 und einen Ausgabeabschnitt zur Weitergabe des Backguts 4 von der Positioniereinrichtung 47 hin zum Backofen 8 dar. Anschließend wird durch Aktivierung des Antriebsmotors 65 die innere Begrenzungswand 60 der Backtrommel 7 einen Takt weitergedreht, sodass der nächste Aufnahmeabschnitt 59 der Durchtrittsöffnung 57 zugeordnet wird. Die äußere Begrenzungswand 58 bleibt hierbei ortsfest. Parallel hierzu wird der Positionierrahmen 48 wieder in die Positionierstellung zurückgedreht und es wird die Förderschnecke 35 betätigt, sodass der nächste Satz von Stücken Backgut 4 über die Rutsche 44 bereitgestellt wird. Der zweite Drehteller 54a steht hierbei in einer Relativposition zum ersten Drehteller 51, in der er einen Boden für die Aufnahmeabschnitte 59 vorgibt. Dieser Vorgang wiederholt sich solange, bis zehn der elf Aufnahmeabschnitte 59 mit jeweils einem Satz von Stücken Backgut 4 befüllt sind.

Anschließend wird die äußere Begrenzungswand 58 relativ zur inneren Begrenzungswand 60 so gedreht, dass die Durchtrittsöffnung 57 dem noch leeren Aufnahmeabschnitt 59 zugeordnet ist. Es beginnt nun der Backvorgang, wobei die beiden Begrenzungswände 58, 60 der Backtrommel 7 synchron zueinander gedreht werden und das Backgut 4 von der beheizten Umluft umströmt wird. Mit Hilfe einer in der Zeichnung nicht dargestellten Beschwadungseinrichtung kann das Backgut 4 während des Backvorgangs beschwadet werden. Die Temperatur im Backofen 8 während des Backvorgangs wird über ein Backprogramm geregelt. Nach Ende des Backvorgangs, der z. B. 10 bis 12 min dauern kann, wird die Backtrommel 7 so gedreht, dass die Durchtrittsöffnung 57 oberhalb der Durchtrittsöffnung 71 in der Gehäusewand 70 zu liegen kommt. Die Klappe 72 wird geöffnet und die innere Begrenzungswand 60 wird bei ortsfester äußerer Begrenzungswand 58 gedreht, wobei das Backgut 4 aus den Aufnahmeabschnitten 59 durch die Durchtrittsöffnung 71 fällt. Die Drehung der inneren Begrenzungswand 60 wird solange fortgesetzt, bis alle Aufnahmeabschnitte 59 leer sind. Anschließend wird die Klappe 72 wieder verschlossen. Das Backgut 4 rutscht unter Schwerkrafteinfluss durch den Ausgabeschacht 73 und die Ausgabeöffnung 5 und fällt von dort in den Tragbehälter.

Bei einer nicht dargestellten Variante der Backanlage 1 ist die Bevorratungseinrichtung mit zur Befüllung der Bevorratungseinrichtung 9 austauschbaren Vorratsbehältern ausgerüstet. Diese können z. B. wie der Vorratsbehälter 10 ausgeführt sein, wobei zum Austausch des Vorratsbehälters 10 die Trennwände 11 bis 14 gemeinsam mit einem oberen Abschnitt der Antriebswelle 19 abgenommen werden können. Natürlich muss bei dieser alternativen Ausgestaltung die Beschickungsöffnung 3 so dimensioniert sein, dass der Vorratsbehälter entnommen werden kann.

Beim Betrieb dieser Variante der Backanlage wird von der Bedienperson solange gewartet, bis der Vorratsbehälter im Zuge des Backvorgangs entleert ist. Anschließend wird dieser entleerte Vorratsbehälter durch einen befüllten Vorratsbehälter ausgetauscht. Es kann jederzeit, also auch zum Beispiel während des Betriebs des Backofens 8, nachgefüllt werden.

Anstelle einer Förderschnecke kann bei der Hub-Fördereinrichtung 34 auch eine vibrierende Fläche zum Einsatz kommen. Derartige vibrierende Flächen zur Förderung sind dem Fachmann bekannt.

Anstelle der Förderschnecke 35 kann die Hub-Fördereinrichtung 34 auch ein umlaufendes Förderband für das Backgut aufweisen, welches zur Förderung des Backguts 4 unter Überwindung einer Höhendifferenz geneigt ist. Insbesondere kann ein derartiges Förderband um 90° zur Horizontalen geneigt sein, also vertikal stehen. Eine Förderfläche des geneigten Förderbandes kann, um einen gut reibschlüssigen Kontakt zum Backgut 4 herzustellen, als Bürstenfläche ausgeführt sein. Im Falle einer vertikal stehenden Förderfläche ist zu dieser beabstandet ein fest montiertes Leitblech zugeordnet, wobei das geförderte Backgut mit einer der Förderfläche gegenüberliegenden Oberfläche in Kontakt mit dem Leitblech steht, sodass ein Abfallen des Backguts 4 von der Förderfläche verhindert ist. Anstelle eines Leitblechs, welches auch bei einer anderweitig, also nicht um 90° geneigten Förderfläche eingesetzt werden kann, kann auch ein zweites, synchron mit dem ersten Förderband laufendes Leitband, welches ebenfalls als endlos umlaufendes Band ausgeführt ist, eingesetzt sein. Das in dieser alternativen Hub-Fördereinrichtung transportierte Backgut 4 läuft dann zwischen der Förderfläche einerseits und dem Leitband andererseits.

Die Hub-Fördereinrichtung kann so ausgestaltet sein, dass sie den Satz Backgut gleich in zur Aufnahme in den Backofen geeigneter Relativposition der Stücke Backgut zueinander bereitstellt. Eine Positioniereinrichtung, wie die Positioniereinrichtung 47, kann dann entfallen. Eine vorgeschaltete Vereinzelung kann hierbei zum Beispiel durch einen Fliehkraftvereinzeler, insbesondere eine Zentrifuge, erfolgen.

Die vorstehend beschriebenen Backanlagen können so ausgerüstet sein, dass die Art sowie die Anzahl der gebackenen Stücke Backgut im Backofen 8 während eines bestimmten Back-Zeitraums, der mehrere Backvorgänge enthalten kann, zur späteren Auswertung erfasst werden können. Hierzu tragen die Gebindebehältnisse, in denen das Backgut 4 zur Befüllung des oberen Vorratsbehälters 10 vorliegt, oder im Falle der austauschbaren Vorratsbehälter diese selber Etiketten, die als Informationen die Art des Backguts im jeweiligen Gebindebehältnis sowie die Anzahl der Stücke Backgut im jeweiligen Gebindebehältnis enthalten. Diese Information kann z. B. in Form eines Strichcodes, wie beispielsweise eines EAN-Codes, auf den Gebindebehältnissen oder auf den austauschbaren Vorratsbehältern aufgebracht sein. Die Gebindeinformation kann anstelle eines Strichcodes auch auf einem RFID-Chip untergebracht sein. Hierbei kann es sich insbesondere um einen Flachchip handeln. Derartige Chips zur Radiofrequency Identification (RFID) sind vom Markt her bekannt. Beim Befüllen der Backanlage 1 wird neben dem Befüllungszeitpunkt die Etiketten-Information in einen Steuerrechner der Backanlage 1 übertragen. Dies kann z. B. automatisch mit Hilfe einer rechnerinternen Uhr und mit Hilfe eines Scanners, z. B. eines Laserscanners, zur Erfassung des Strichcodes erfolgen, der an der Backanlage 1 angeordnet ist. Alternativ können die Etiketten-Informationen auch als Klartext-Informationen vorliegen, wobei die Bedienperson dann beim Befüllen der Backanlage 1 diese Informationen und den Befüllzeitpunkt über eine entsprechende Eingabeeinrichtung an den Steuerrechner der Backanlage weitergibt. Nach dem Befüllen der Backanlage 1 mit Backgut wird dieses zum Backofen 8 gefördert und dort gebacken, wie oben beschrieben. Die im Steuerrechner erfassten Etiketten-Informationen werden über einen Back-Zeitraum, der mehrere Backvorgänge umfasst, z. B. über einen Tag oder eine Woche, gesammelt und zusammengestellt. Die so erhaltenen Etiketten-Informationen werden dann zur Optimierung des Betriebes der Backanlage ausgewertet. Hierzu wird z. B. ermittelt, welche Art Backgut häufig im Backofen 8 gebacken wird, damit von dieser Art Backgut eine entsprechende Menge vorgehalten werden kann. Arten von Backgut, welche weniger oft gebacken werden, müssen entsprechend in geringerer Anzahl vorgehalten werden. Über eine Langzeitauswertung kann z. B. auch ein Wochenrhythmus im Kundenverhalten festgestellt werden. So ist es z. B. möglich, über die Auswertung der Etiketten-Informationen herauszufinden, ob bestimmte Arten von Backgut am Wochenende stärker nachgefragt werden als an Werktagen. Hierzu wird beim Auswerten auch die Information herangezogen, zu welchem Zeitpunkt und an welchem Datum ein bestimmtes Gebindebehältnis eingefüllt wurde, also z. B. an welchem Wochentag und zu welcher Uhrzeit. Neben einem Wochenrhythmus ist natürlich entsprechend auch ein Tagesrhythmus erfassbar. Fertiggebackenes Backgut 4 gelangt über die Ausgabeöffnung 5 in den Tragbehälter. Dieser kann mit einer Einrichtung zur Erfassung der darin befindlichen Menge versehen sein, zum Beispiel mit einer Waage. Über die im Tragbehälter bevorratete Menge fertiggebackenen Backguts 4 wird der Betrieb des Backofens 8 gesteuert. Dies erfolgt mittels einer vorgegebenen Mindestmenge fertiggebackenen Backguts 4. Sobald diese unterschritten wird, wird die Backanlage 1 in Betrieb genommen. Dies erfolgt solange, wie in der Bevorratungseinrichtung 9 noch Backgut 4 vorhanden ist. Wenn die Bevorratungseinrichtung 9 entleert ist, gibt die Backanlage 1 ein zum Beispiel optisches oder akustisches Signal für ein erneutes Befüllen der Bevorratungseinrichtung 9.

Anstelle eines Tragbehälters kann am Ausgang der Ausgabeöffnung 5 auch ein kundenzugänglicher Entnahmebehälter vorgesehen sein.

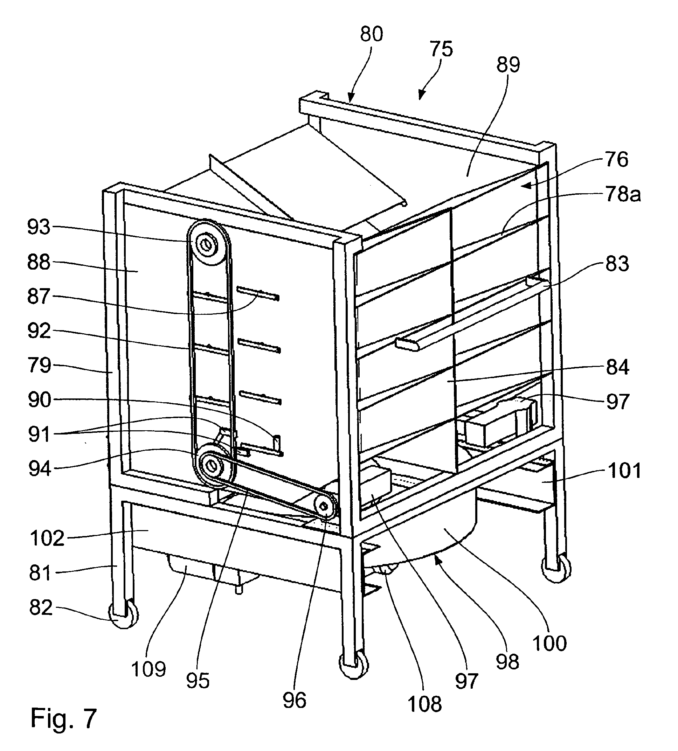

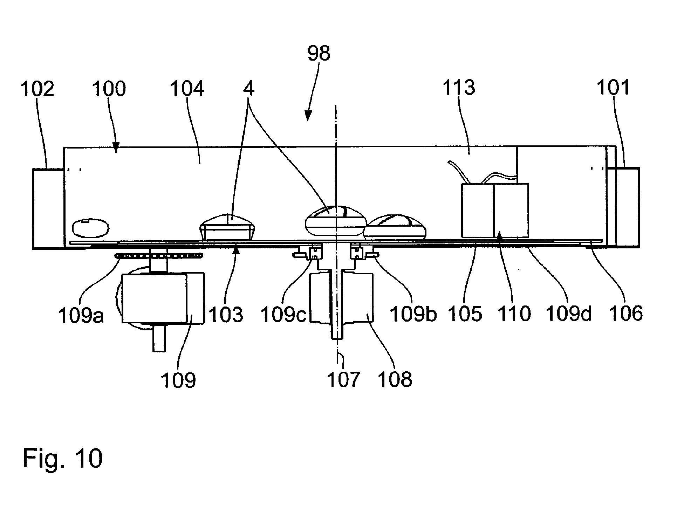

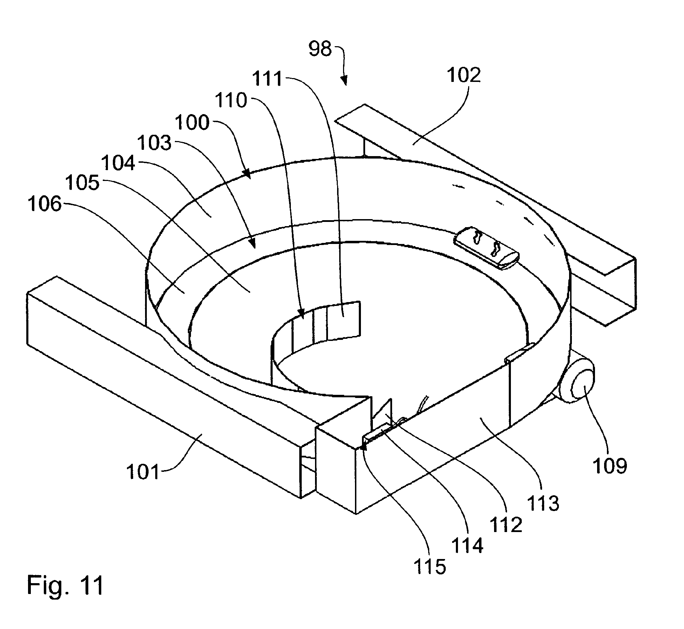

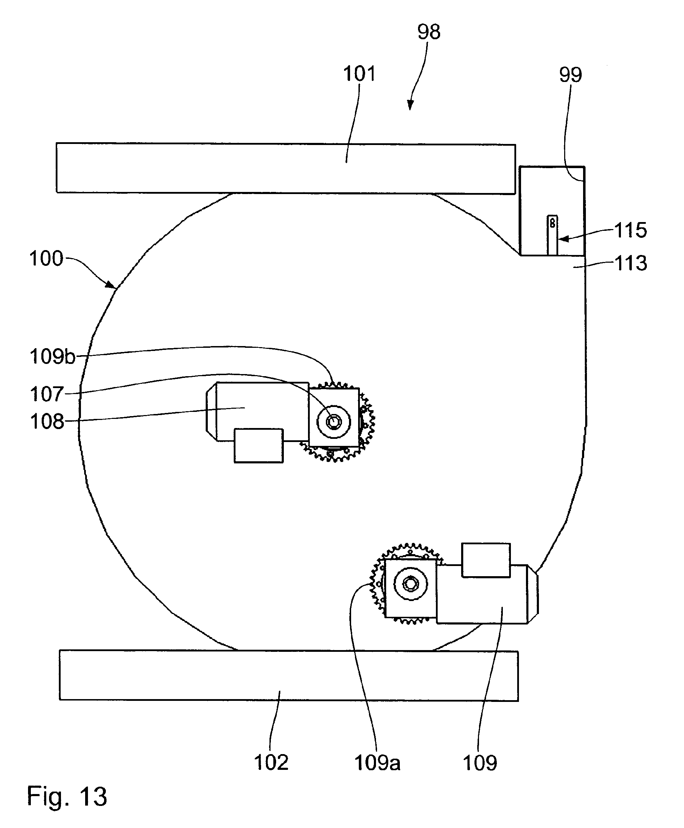

In den Figuren 7 bis 13 ist eine Bevorratungseinrichtung 75 für Backgut 4 dargestellt, welche alternativ zur Bevorratungseinrichtung 9 bei der Backanlage 1 zum Einsatz kommen kann. Die Bevorratungseinrichtung 75 weist als Vorratsbehälter insgesamt sechzehn Lagerfächer 76 auf. Jedes der Lagerfächer 76 hat einen schräg von einem äußeren Zugabeabschnitt 77 hin zu einem inneren Abgabeabschnitt 78 schräg abfallenden Fachboden 78a. Die Fachböden 78a der Lagerfächer 76 sind als Rollenbahnen ausgeführt. Jeweils vier der sechzehn Lagerfächer 76 sind etagenweise übereinander angeordnet. Die Lagerfächer 76 werden von einem Tragrahmen 79 eines fahrbaren Bevorratungs-Transportwagens 80 getragen. Letzterer weist vier Stützfüße 81 mit jeweils einer Laufrolle 82 auf. Zum Transport durch eine Bedienperson weist der Transportwagen 80 einen Handgriff 83 auf.

Die Abgabeabschnitte 78 von jeweils acht der 16 Lagerfächer 76 sind zu zwei gegenüberliegenden Stirnseiten des Transportwagens 80 hin offen. Die acht einer dieser beiden Stirnseiten des Transportwagens 80 zugeordneten Lagerfächer 76 sind als 2x4 nebeneinander angeordnete Lagerfächer 76, also in zwei nebeneinander angeordneten Vierer-Gruppen, vorgesehen. Die nebeneinander liegenden Lagerfächer 76 haben dabei durchgehende Fachböden 78a und werden durch eine vertikal verlaufende durchgehende mittlere Trennwand 84 voneinander getrennt. Der Lagerbereich der Bevorratungseinrichtung 75 ist zur Trennwand 84 symmetrisch angeordnet.

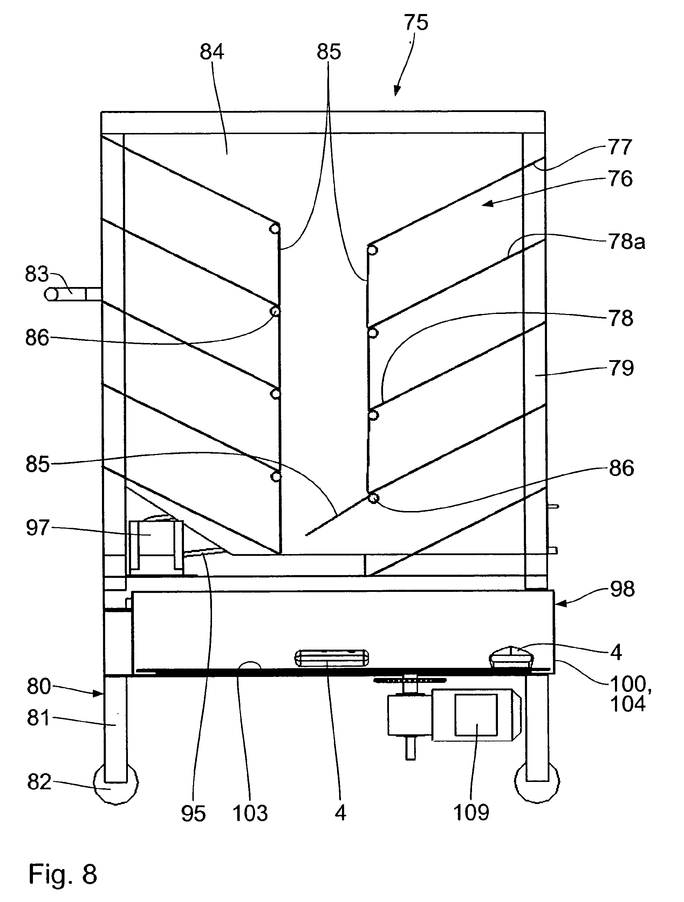

Die Abgabeabschnitte 78 der Lagerfächer 76 sind mit Hilfe von Ausgabeklappen 85 verschließbar, die jeweils über ein horizontal verlaufendes Schwenkgelenk 86 zwischen einer Schließstellung, in welcher sie den Abgabeschnitt 78 verschließen, und einer Offenstellung, in welcher eine Abgabe aus dem jeweiligen Lagerfach 76 möglich ist, verschwenkbar sind. Mit Hilfe einer Feder sind die Ausgabeklappen 85 in der Schließstellung vorgespannt. Figur 8 zeigt die Ausgabeklappe 85 des rechts unten dargestellten Lagerfaches 76 in der Offenstellung und die anderen Ausgabeklappen 85 in der Schließstellung.

Drehfest mit jeder der Ausgabeklappen 85 ist jeweils ein Betätigungshebel 87 in der Verlängerung der Schwenkgelenke 86 jeder Ausgabeklappe 85 zugeordnet. Die also insgesamt sechzehn Betätigungshebel 87 sind durch gegenüberliegende Seitenwände 88, 89 des Transportwagens 80, welche parallel zur Trennwand 84 verlaufen, hindurchgeführt, sodass eine Betätigung der Betätigungshebel 87 durch die Seitenwände 88, 89 getrennt von den Lagerfächern 76 erfolgt. In einer Schließstellung sind die Betätigungshebel 87 durch Federn 90 vorgespannt, die von der jeweiligen Seitenwand 88, 89 gehalten werden. Bedingt durch die Anordnung der Lagerfächer 76 liegen die durch eine der Seitenwände 88, 89 hindurchgeführten Betätigungshebel 87 in zwei übereinander angeordneten Vierer-Gruppen vor. Zur Verlagerung jeweils der Betätigungshebel 87 einer dieser Vierer-Gruppen dient ein Mitnehmer 91, sodass für die Betätigungshebel 87 einer Seitenwand 88, 89 zwei Mitnehmer 91 vorgesehen sind. Die beiden einer Seitenwand 88, 89 zugeordneten Mitnehmer 91 sind fest mit einer Endlos-Antriebskette 92 verbunden, welche über zwei übereinander angeordnete Umlenk-Ritzel 93, 94 geführt ist. Letztere werden von der ihnen zugeordneten Seitenwand 88, 89 getragen. Das jeweils untere Umlenk-Ritzel 94 ist über eine weitere Endlos-Antriebskette 95 und ein Antriebsritzel 96 eines Antriebsmotors 97 angetrieben. In Figur 7 ist der Betätigungshebel 87 des dem Betrachter zugewandten linken unteren Lagerfachs 76 in einer Offenstellung und die anderen Betätigungshebel 87 in der Schließstellung dargestellt.

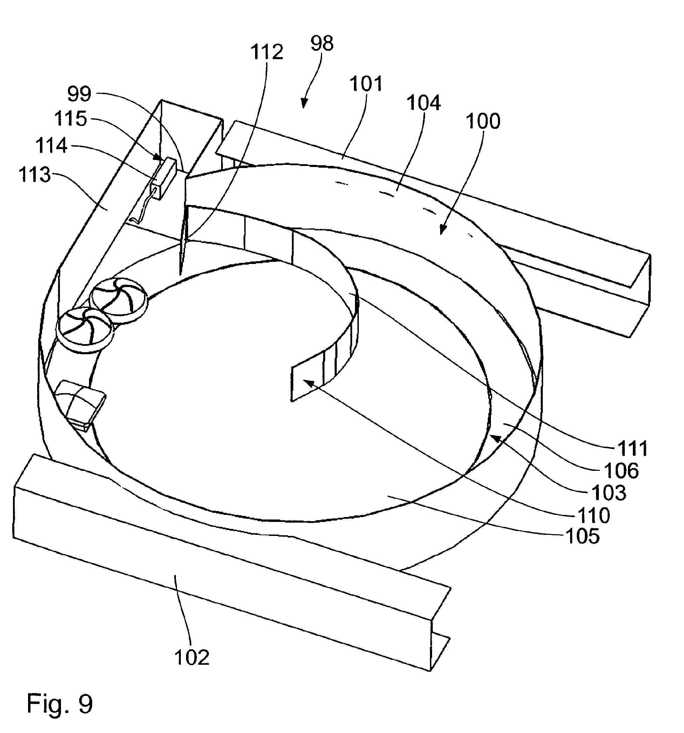

Den Ausgabeabschnitten 78 der Lagerfächer 76 ist bei der Bevorratungseinrichtung 75 eine Bevorratungs-Fördereinrichtung 98 zur Förderung des Backguts 4 hin zu einer Vorrats-Ausgabeöffnung 99 nachgeordnet. Die Bevorratungs-Fördereinrichtung 98, die stärker im Detail in den Figuren 9 bis 13 dargestellt ist, ersetzt bei der Bevorratungseinrichtung 75 den Förderbehälter 27 mit den Förderschaufeln 28, 29 der Bevorratungseinrichtung 9 bei der Ausführung nach den Figuren 1 bis 6.

Die Bevorratungs-Fördereinrichtung 98 umfasst einen im Wesentlichen runden Förderbehälter 100, der von zwei gegenüberliegenden, U-fÖrmig profilierten Tragprofilen 101, 102 getragen ist, welche wiederum an den Stützfüßen 81 des Transportwagens 80 festgelegt sind. Der Förderbehälter 100 hat einen runden Behälterboden 103 und eine im Wesentlichen hohlzylindrische Behälterwand 104. Der Behälterboden 103 ist in einen runden Innenabschnitt 105 und in einen diesen umgebenden ringförmigen Außenabschnitt 106 unterteilt. Der Innenabschnitt 105 und der Außenabschnitt 106 sind unabhängig nach Art einer Drehscheibe voneinander um eine gemeinsame zentrale Rotationsachse 107 antreibbar, die senkrecht auf der Bodenebene des Behälterbodens 103 steht. Der Innenabschnitt 105 ist mit Hilfe eines Antriebsmotors 108 um die Rotationsachse 107 drehbar, der unterhalb des Behälterbodens 103 am Tragrahmen 79 des Transportwagens 80 festgelegt ist. Zur Drehung des Außenabschnitts 106 dient ein ebenfalls unter dem Behälterboden 103 angeordneter Antriebsmotor 109, der ebenfalls am Tragrahmen 79 festgelegt ist. Hierzu treibt der Antriebsmotor 109 ein Antriebsritzel 109 a an, welches über eine nicht dargestellte Antriebskette ein Transmissionsritzel 109 b antreibt. Das Transmissionsritzel 109 b ist um die Rotationsachse 107, gelagert über ein Axial-Radial-Lager 109 c, welches ebenfalls am Tragrahmen 79 festgelegt ist, drehbar. Über Ausleger 109 d ist das Transmissionsritzel 109 b drehfest mit dem Außenabschnitt 106 verbunden.

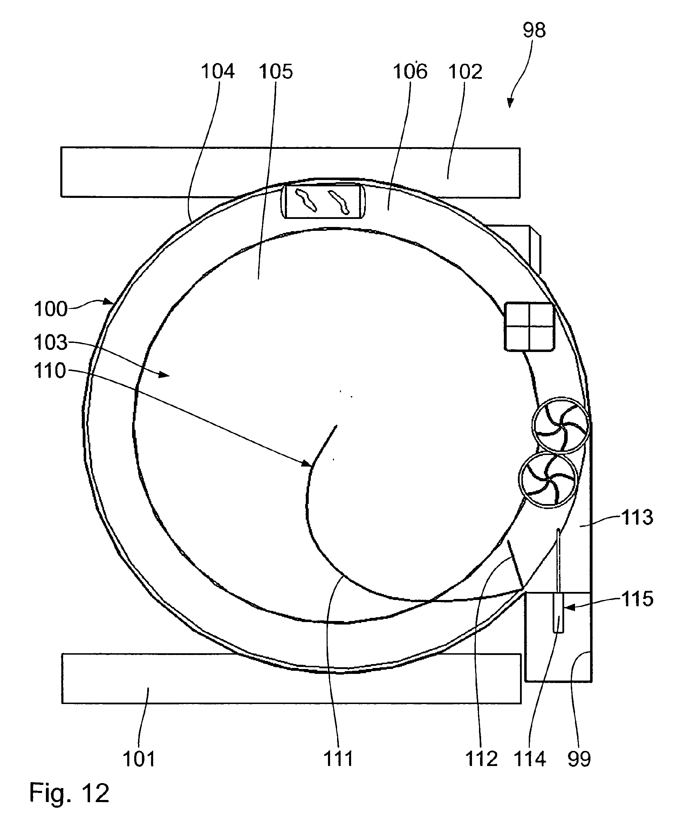

Starr mit der Behälterwand 104 ist ein Leitblech 110 verbunden, welches einen ersten gebogenen Leitabschnitt 111 und einen zweiten, im Vergleich hierzu kurzen geraden Leitabschnitt 112 aufweist. Beide Leitabschnitte 111, 112 verlaufen so knapp oberhalb des Behälterbodens 103, dass sie auf diesem angeordnetes Backgut 4 leiten können. Der längere Leitabschnitt 111 verläuft, wie insbesondere die Aufsicht der Figur 12 zeigt, ausgehend von der Behälterwand 104 in einem zunehmend stärker im Uhrzeigersinn gekrümmten Bogen bis zu einem Bereich oberhalb des Mittelpunktes des Innenabschnitts 105. Der kurze Leitabschnitt 112 überdeckt im Wesentlichen die gesamte Breite des Außenabschnitts 106. Im Bereich des kurzen Leitabschnitts 112 ist die ansonsten geschlossene Behälterwand 104 unterbrochen, wobei sich hieran ein Ausgabeabschnitt 113 der Bevorratungs-Fördereinrichtung 98 anschließt. Der Ausgabeabschnitt 113 setzt den Behälterboden 103 außerhalb des Außenabschnitts 106 zunächst ein Stück weit fort, bevor sich hieran die Vorrats-Ausgabeöffnung 99 anschließt. In die Vorrats-Ausgabeöffnung 99 ragt ein Sensorelement 114 eines Sensors 115 zum Zählen des die Vorrats-Ausgabeöffnung 99 durchtretenden Backguts 4. Als Sensor 115 kann z. B. eine Lichtschranke eingesetzt sein.
Die Bevorratungseinrichtung 75 mit der Bevorratungs-Fördereinrichtung 98 wird im Austausch gegen die Bevorratungseinrichtung 9 nach den Figuren 1 bis 6 folgendermaßen eingesetzt: In einer Befüllstation werden alle Lagerfächer 76 des Transportwagens 80 befüllt, wobei hierbei alle Ausgabeklappen 85 in Schließstellung vorliegen. Anschließend wird der Transportwagen 80 so in der Backanlage 1 in Position gebracht, dass die Vorrats-Ausgabeöffnung 99 oberhalb der zur Hub-Fördereinrichtung 34 führenden Rutsche 33 zu liegen kommt. Die Position der Vorrats-Ausgabeöffnung 99 entspricht dabei derjenigen der Vorrats-Ausgabeöffnung 32a bei der Ausführung der Bevorratungseinrichtung 9 nach den Figuren 1 bis 6.

Beim Betrieb der Backanlage 1 wird nach Bedarf Backgut 4 aus den Lagerfächern 76, vereinzelt über die Bevorratungs-Fördereinrichtung 98 der Hub-Fördereinrichtung 34 zugeführt. Hierzu werden, gesteuert von der zentralen Steuereinrichtung der Backanlage 1, die Antriebsmotoren 97 so angesteuert, dass die Mitnehmer 91 sequentiell die Betätigungshebel 87 von der Schließstellung in die Offenstellung verlagern, sodass die zugeordneten Ausgabeklappen 85 öffnen und das in den jeweiligen Lagerfächern 76 zwischengelagerte Backgut vom jeweiligen Abgabeabschnitt 78 hin zum Förderbehälter 100 der Bevorratungs-Fördereinrichtung 98 übergeben wird. Der jeweils betätigte Antriebsmotor 97 stoppt, sobald die Ausgabeklappe 85 ganz geöffnet ist. Das Backgut 4 fällt dabei zunächst überwiegend auf den Innenabschnitt 105 des Behälterbodens 103 des Förderbehälters 100.
Nun wird zunächst der Innenabschnitt 105, gesteuert vom Antriebsmotor 108, kurzzeitig, z. B. 5 Sekunden lang, gegen den Uhrzeigersinn entsprechend der Aufsicht von Figur 12 gedreht. Durch den Leitabschnitt 111 des Leitblechs 110 wird aufgrund der Relativbewegung des Innenabschnitts 105 zum Leitblech 110 das Backgut 4 auf diese Weise vom Innenabschnitt 105 auf den Außenabschnitt 106 transportiert. Gleichzeitig dreht sich der Außenabschnitt 106, angetrieben vom Antriebsmotor 109, in Figur 12 im Uhrzeigersinn, sodass das auf den Außenabschnitt 106 liegende Backgut 4 hin zum Ausgabeabschnitt 113 gefördert wird, wohin es vom Außenabschnitt 106 durch den kurzen Leitabschnitt 112 des Leitblechs 110 geleitet wird. Um einen Stau des Backguts 4 im Förderbehälter 100 im Bereich des Leitabschnitts 111 zu vermeiden, wird der Drehsinn des Innenabschnitts 105 von Zeit zu Zeit gewechselt. Vom Ausgabeabschnitt 113 aus fällt das Backgut 4 durch die Vorrats-Ausgabeöffnung 99 und wird hierbei vom Sensor 115 gezählt. Der Sensor 115, der mit der zentralen Steuereinrichtung der Backanlage 1 verbunden ist, gibt dieser eine Rückmeldung, inwieweit der angeforderte Bedarf an Backgut 4 gedeckt ist. Wenn die erforderliche Anzahl von Stücken Backgut 4 durch die Vorrats-Ausgabeöffnung 99 gefallen ist, stoppt die zentrale Steuereinrichtung die Antriebsmotoren 108 und 109 und auch eine weitere Betätigung der Antriebsmotoren 97, sodass keine weitere Ausgabeklappe 85 geöffnet wird. Das durch die Vorrats-Ausgabeöffnung 99 fallende Backgut 4 gelangt über die Rutsche 33 hin zur Hub-Fördereinrichtung 34 und wird weiterverarbeitet, wie im Zusammenhang mit den Figuren 1 bis 6 beschrieben.

Die beschriebenen Bevorratungseinrichtungen 9, 75 können auch bei einer Backanlage eingesetzt sein, bei der keine Hub-Förderung stattfindet.

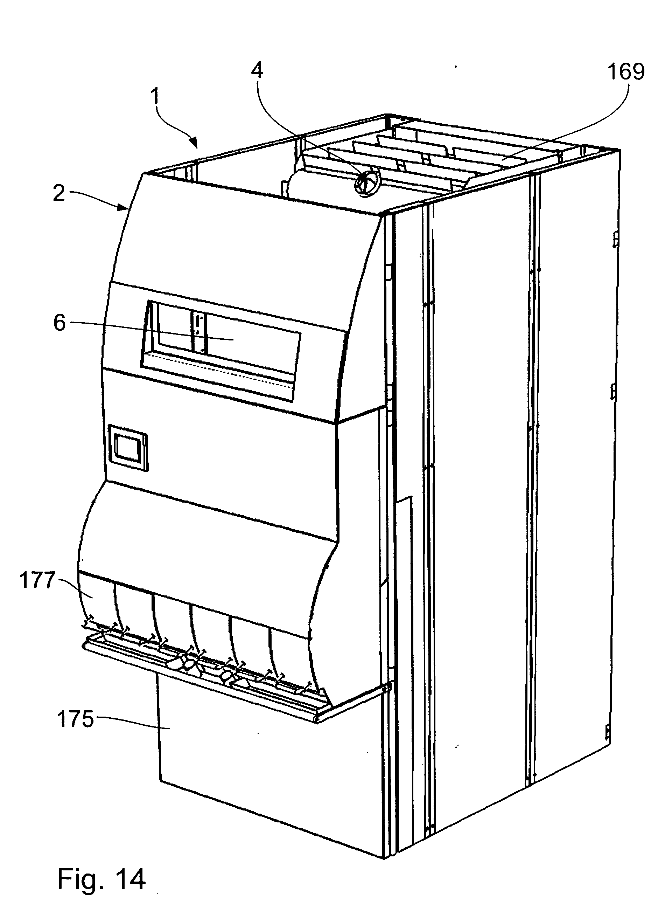

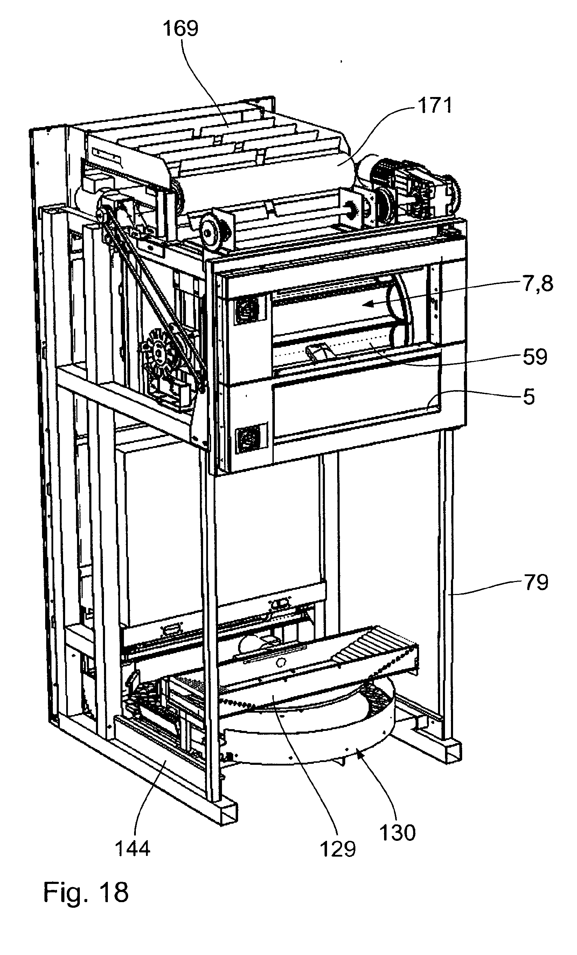

In den Fig. 14 bis 27 ist eine weitere Variante einer Backanlage mit einer Beschickungsvorrichtung bzw. Komponenten hiervon dargestellt. Bauteile, die denjenigen entsprechen, die vorstehend schon unter Bezugnahme auf die Fig. 1 bis 13 beschrieben wurden, tragen die gleichen Bezugszeichen und werden nicht nochmals im Einzelnen erläutert.

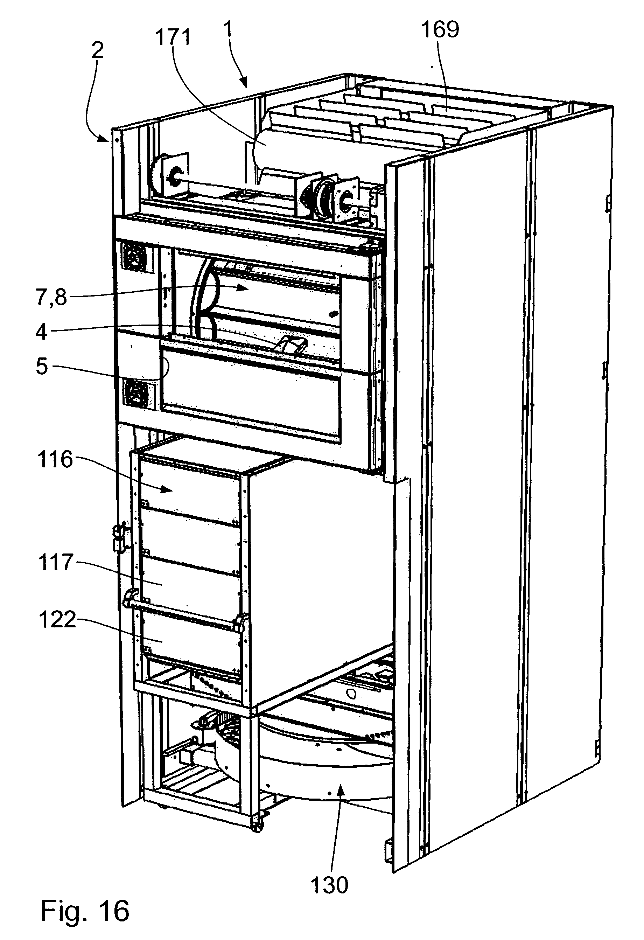

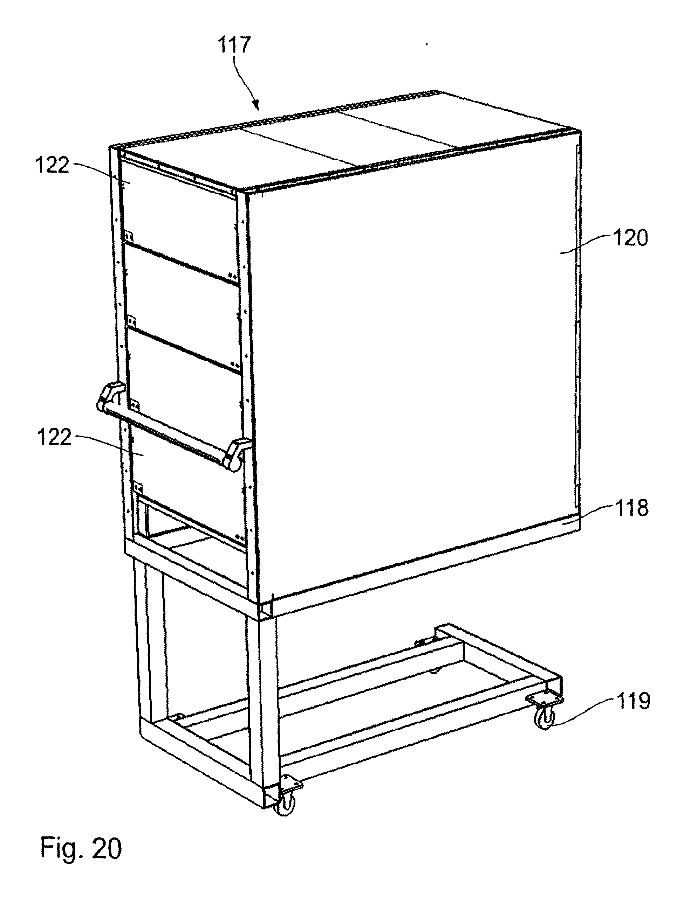

Eine Bevorratungseinrichtung 116 für Backgut 4 umfasst bei der Backanlage 1 nach den Fig. 14 bis 27 zwei nebeneinander angeordnete fahrbare Behälterträger 117, von denen in Fig. 16 nur einer dargestellt ist. Der zweite Behälterträger 117 kann in den in Fig. 16 erkennbaren Aufnahmeraum rechts des dargestellten Behälterträgers 117 eingeschoben werden. Fig. 20 zeigt einen der Behälterträger 117. Dieser umfasst einen in Seitenansicht in etwa C-förmigen Tragrahmen 118. Am unteren Schenkel des Tragrahmens 118 sind vier Laufrollen 119 angebracht, so dass der Behälterträger 117 insgesamt verfahrbar ist. Auf dem oberen C-Schenkel des Tragrahmens 118 ist ein Behältergehäuse 120 mit einer Mehrzahl von Lagerbehältern 121 aufgesetzt, die als Vorratsbehälter für Backgut 4 dienen. Die Unterteilung des Behältergehäuses 120 in Lagerfächer 121 entspricht der Unterteilung der in Fig. 8 dargestellten Bevorratungseinrichtung 75. Die Zugabeabschnitte 77 der Lagerfächer 121 können mit Befüllklappen 122 verschlossen werden.

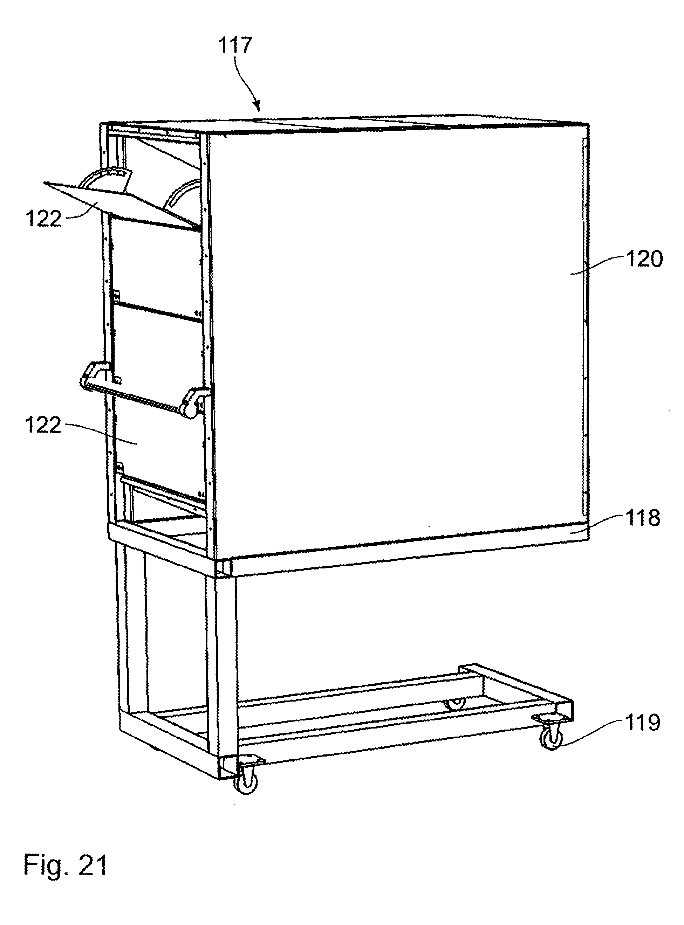

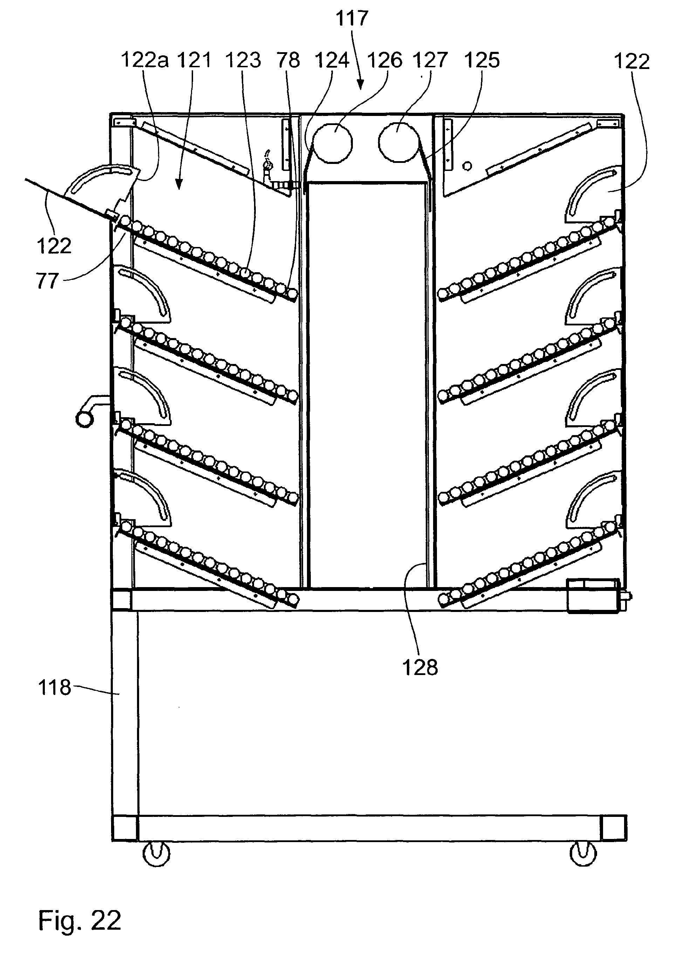

In den Fig. 21 und 22 ist die linke obere dieser Befüllklappen 122 in Offenstellung dargestellt. Ansonsten sind die Befüllklappen 122 in Schließstellung gezeigt. Die Befüllklappen 122 weisen einen Klappenboden 122a auf, begrenzen also in der Offenstellung einen Befüllraum in der Form eines geviertelten Hohlzylinders. Den Boden der schräg zum Abgabeabschnitt 78 abfallenden Lagerfächer 121 bilden Rollenbahnen 123. Die Lagerfächer 121 sind beim Behälterträger 117 der Ausführung nach den Fig. 14 bis 27 nicht durch Ausgabeklappen, sondern durch zwei Ausgabe-Schiebewände 124, 125 verschlossen, die als Gelenkgliederwände ausgestaltet sind. Die vier in Fig. 22 linken Lagerfächer 121 sind dabei von der Ausgabe-Schiebewand 124 und die vier in Fig. 22 rechten Lagerfächer 121 von der Ausgabe-Schiebewand 125 verschlossen. Die Ausgabe-Schiebewände 124, 125 können auf in Fig. 22 schematisch dargestellte, angetriebene Rollen 126, 127 aufgerollt werden.

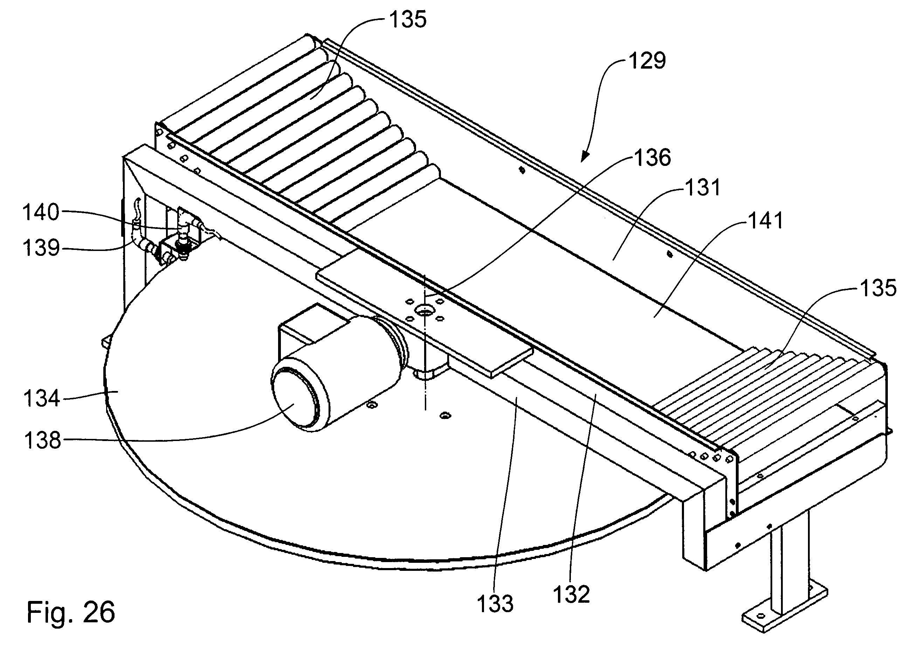

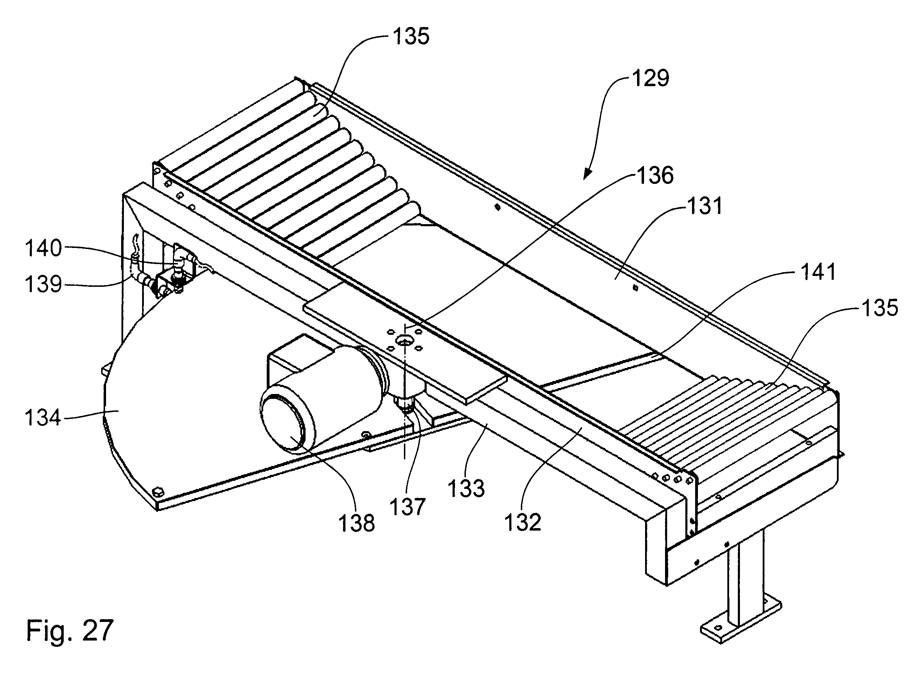

Die Abgabeabschnitte 78 der Lagerfächer 121 münden in einen zentralen Fallschacht 128. Unter diesem ist bei in das Gehäuse 2 eingefahrenen Behälterträgem 117 ein Zwischenbehälter 129 einer Bevorratungs-Fördereinrichtung 130 angeordnet. Letztere hat entsprechend der Bevorratungs-Fördereinrichtung 98 der Ausführung nach den Fig. 7 bis 13 ebenfalls die Funktion der Förderung des Backguts hin zu einer Vorrats-Ausgabeöffnung der Bevorratungseinrichtung 116 sowie der Backgutd3argestellt und der Zwischenbehälter 129 einzeln in den Fig. 26 und 27.

Der nach oben offene Zwischenbehälter 129 ist seitlich begrenzt von zwei gegenüberliegenden Seitenwänden 131, 132, die an einem Tragrahmen 133 montiert sind. Weiterhin ist der Zwischenbehälter 129 zwischen den Seitenwänden 131, 132 seitlich begrenzt durch zu einem Zwischenbehälterboden 134 hin abfallenden, gegenüberliegenden Rollenbahnen 135. Der Zwischenbehälterboden 134 ist in etwa halbkreisförmig und um eine vertikale Achse 136, die durch den Kreismittelpunkt dieses Halbkreises verläuft, schwenkbar. Die Schwenkachse 136 ist daher in Bezug auf die Fläche des Zwischenbehälterbodens 134 außermittig.

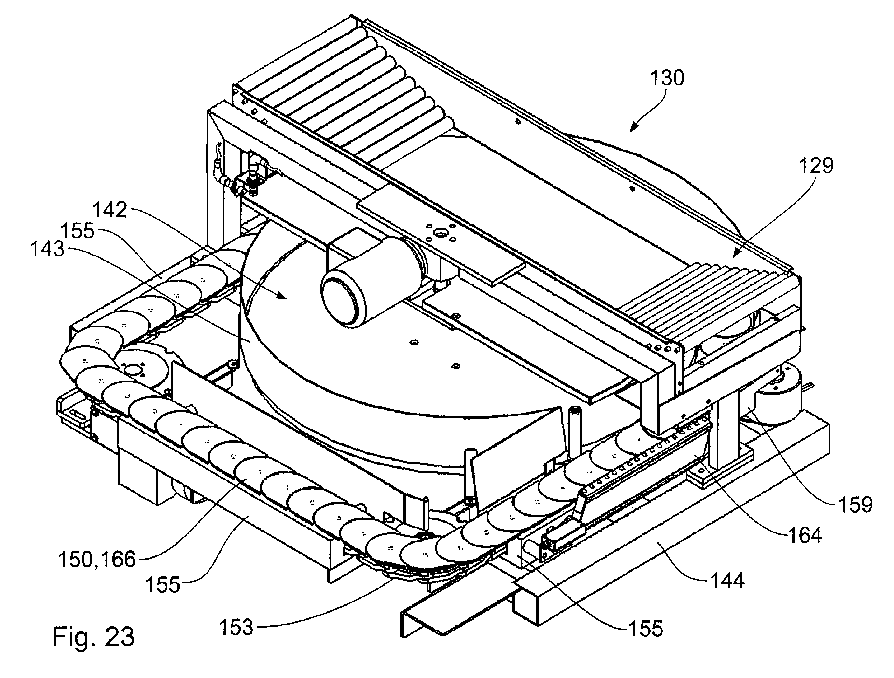

Zum Schwenkantrieb greift ein Antriebsritzel 137 eines am Tragrahmen 133 festgelegten Antriebsmotors 138 in einen komplementär hierzu ausgeführten Gegenkörper im Zwischenbehälterboden 134 ein. Die Momentanstellung des Zwischenbehälterbodens 134, also seine momentane Schwenkposition um die Schwenkachse 136, wird durch Sensoren 139, 140 erfasst. Der Winkelstellungssensor 139 erfasst hierbei den momentanen Schwenkwinkel des Zwischenbehälterbodens 134 um die Schwenkachse 136. Der als Lichtschranke ausgeführte Sensor 140 erfasst, ob der Zwischenbehälterboden134 in einer zum Beispiel in Fig. 23 dargestellten Schließstellung, in welche er den Zwischenbehälter 129 vollständig verschließt, oder in einer gegenüber der Schließstellung um die Achse 136 verschwenkten Abgabestellung vorliegt. In der Schließstellung wird die Lichtschranke des Sensors 140 durch den Zwischenbehälterboden 134 nicht unterbrochen, in den Abgabestellungen hingegen schon.

Zwei Abgabestellungen des Zwischenbehälterbodens 134 sind beispielhaft in den Fig. 26 und 27 dargestellt. In der Abgabestellung nach Fig. 26 ist der Zwischenbehälterboden 134 vollständig um 180° aus der Schließstellung herausgeschwenkt, so dass der Zwischenbehälter 129 nach unten offen ist. In der Abgabestellung nach Fig. 27 ist der Zwischenbehälterboden um etwa 60° entgegen dem Uhrzeigersinn um die Schwenkachse 136 aus der Schließstellung heraus verschwenkt, so dass eine Abgabeöffnung 141 resultiert, deren Weite ungefähr ein Viertel der vollständig geöffneten Abgabeöffnung 141 gemäß Fig. 26 beträgt.

Unter der Abgabeöffnung 141 ist eine Vereinzelungseinheit 142 der Bevorratungs-Fördereinrichtung 130 angeordnet, wie zum Beispiel in Fig. 23 dargestellt. Diese umfasst einen Förderbehälter 143, der eine dem Förderbehälter 100 der Ausführung nach den Fig. 7 bis 13 vergleichbare Funktion hat. Der Zwischenbehälter 129 und der Förderbehälter 143 werden von Tragprofilen 144a getragen, die ihrerseits am Tragrahmen 79 der Backanlage 1 festgelegt sind.

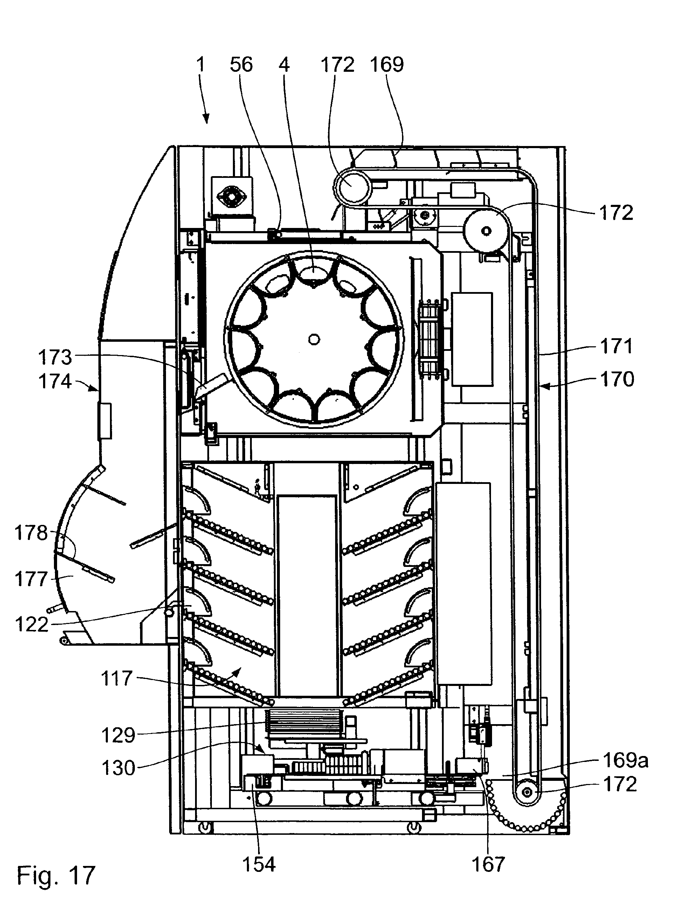

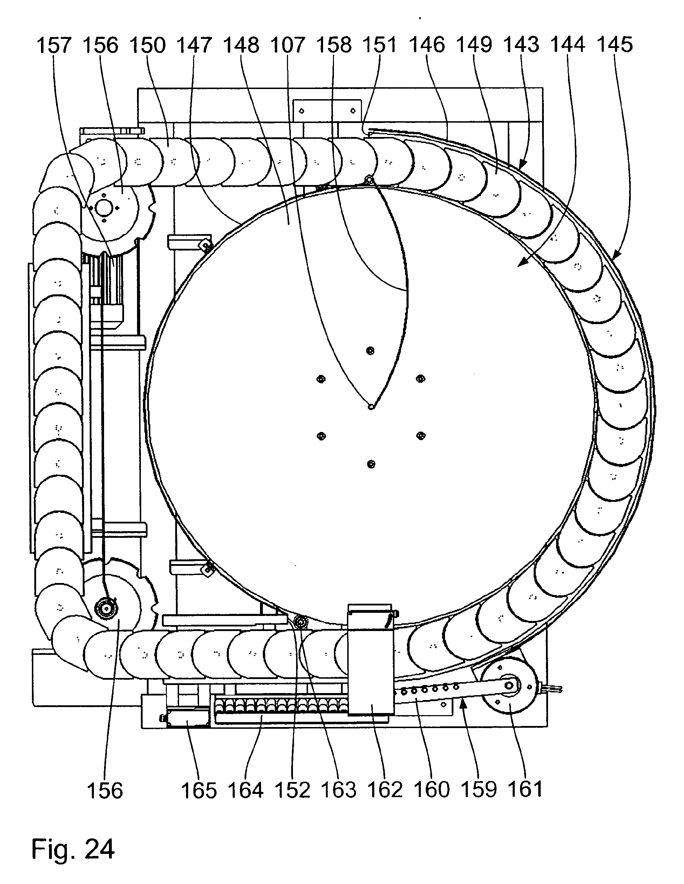

Der Förderbehälter 143 hat einen im Wesentlichen runden Behälterboden 144 und eine im Wesentlichen zylindrische Behälterwand 145 mit einem ersten Behälterwandabschnitt 146, der in Fig. 24 rechts dargestellt ist, und einem zweiten, in Fig. 24 linken Behälterwandabschnitt 147, der im Vergleich zum ersten Behälterwandabschnitt 146 einen kleineren Krümmungsradius aufweist. Der Behälterboden 144 weist einen runden Innenabschnitt 148 nach Art des Innenabschnitts 105 der Ausführung nach den Fig. 7 bis 13 und einen diesen außen teilweise umgebenden, teilringförmigen Außenabschnitt 149 auf. Letzterer wird gebildet von einem als Schuppenband ausgestalteten Förderband 150, welches in der Aufsicht gemäß Fig. 24 im Uhrzeigersinn umläuft. Das Förderband 150 tritt in den Förderbehälter 143 in Fig. 24 oben durch eine zwischen den Behälterwandabschnitten 146, 147 gebildete Eintrittsöffnung 151 ein und aus dem Förderbehälter 143 durch eine in Fig. 24 unten dargestellte Austrittsöffnung 152 zwischen den Behälterwandabschnitten 146, 147 aus. Das Schuppenband des Förderbands 150 wird getragen von einer Förderkette 153. Letztere ist im Bereich des Außenabschnitts 149 geführt in einem teilkreisförmigen Führungsprofil 154 (vgl. Fig. 17). Der Abschnitt des Förderbandes 150 außerhalb des Förderbehälters 143, also zwischen der Austrittsöffnung 152 und der Eintrittsöffnung 151, wird geführt von weiteren Führungsprofilen 155 und umgelenkt von zwei in die Förderkette 153 eingreifenden Ritzeln 156, wobei eines der Ritzel 156 von einem Motor 157 angetrieben ist.

Der Innenabschnitt 148 ist über einen Antriebsmotor 108 um die zentrale, vertikale Rotationsachse 107 drehbar, wie im Zusammenhang mit der Ausführung nach den Fig. 7 bis 13 beschrieben.

Starr mit dem ersten Behälterwandabschnitt 146 ist im Bereich der Eintrittsöffnung 151 ein Leitblech 158 starr mit dem zweiten Behälterwandabschnitt 147 verbunden.

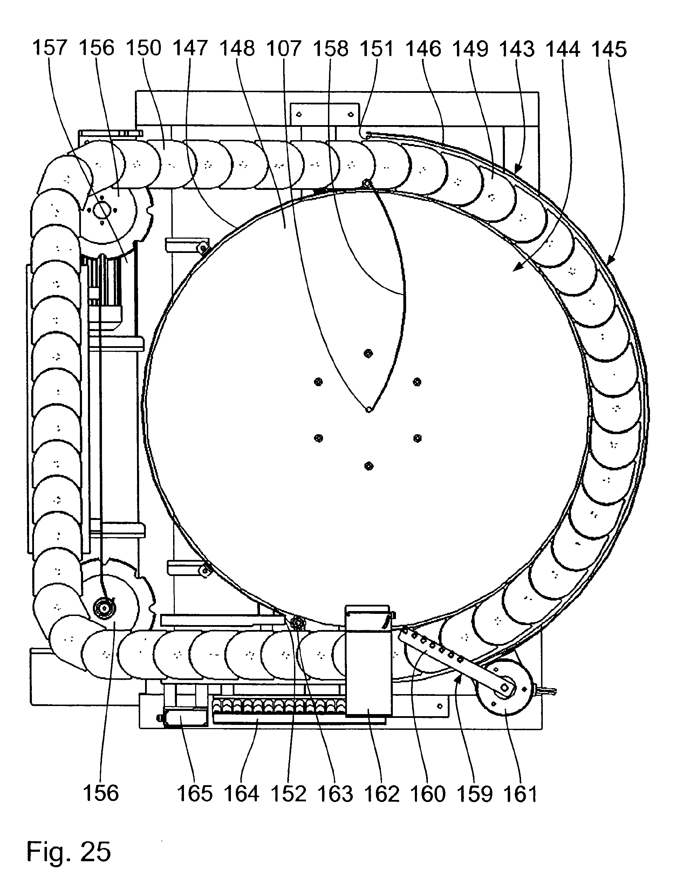

In Bezug auf die Förderrichtung des Förderbandes 150 stromaufwärts der Austrittsöffnung 152 ist neben dem Förderband 150 an dessen Außenseite ein Vereinzelungs-Abweiser 159 angeordnet. Dieser weist eine Abweisklappe 160 auf, die von einer Antriebseinheit 161 zwischen einer in Fig. 24 gezeigten Durchgangsstellung und einer in Fig. 25 gezeigten Abweisstellung umgestellt werden kann. In letzterer versperrt die Abweisklappe 160 das Förderband 150 vor der Austrittsöffnung 152.

In Bezug auf die Förderrichtung des Förderbandes 150 stromabwärts ist dem Vereinzelungs-Abweiser 159 ein als Lichtschranke ausgebildeter Vereinzelungssensor 162 zugeordnet. Im Bereich der Austrittsöffnung 152 ist das Förderband 150 nach innen durch eine Ablenkrolle 163 und nach außen durch einen parallel zum Förderband 150 verlaufenden Begrenzungswandabschnitt 164 begrenzt. Stromabwärts des Begrenzungswandabschnitts 164 ist neben dem Förderband 150 ein weiterer Lichtschrankensensor 165 angeordnet.

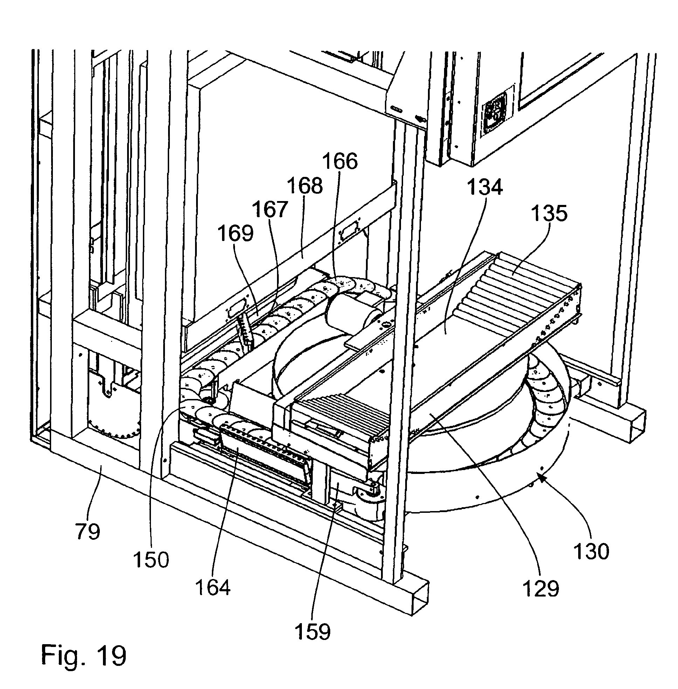

Ein gerade verlaufender Abschnitt des Förderbandes zwischen den beiden Umlenkritzeln 156 stellt ein Ausgabe-Fördertrum 166 des Förderbandes 150, also einen Förder-Ausgabeabschnitt von diesem, dar. Längs dieses Ausgabe-Fördertrums 166 als Positioniereinheit angetrieben verstellbar ist ein Ausgabeschieber 167 (vgl. Fig. 19). Die Verstellbewegung des Ausgabeschiebers 167 ist geführt über eine Führungsschiene 168, die mit dem Tragrahmen 79 der Backanlage 1 verbunden ist. In der in Fig. 19 dargestellten Momentanposition ist dem Ausgabe-Fördertrum 166 eine von insgesamt zehn Tragrinnen 169 benachbart. Die Tragrinnen 169 sind als Zugabeabschnitte Bestandteil einer Hub-Fördereinrichtung 170, die eine Alternative zur Hub-Fördereinrichtung 34 nach den Ausgestaltungen gemäß den Fig. 1 bis 13 darstellt. Die Hub-Fördereinrichtung 170 umfasst ein Endlos-Förderband 171, welches um horizontal angeordnete Umlenkwellen 172, von denen eine angetrieben ist, umläuft.

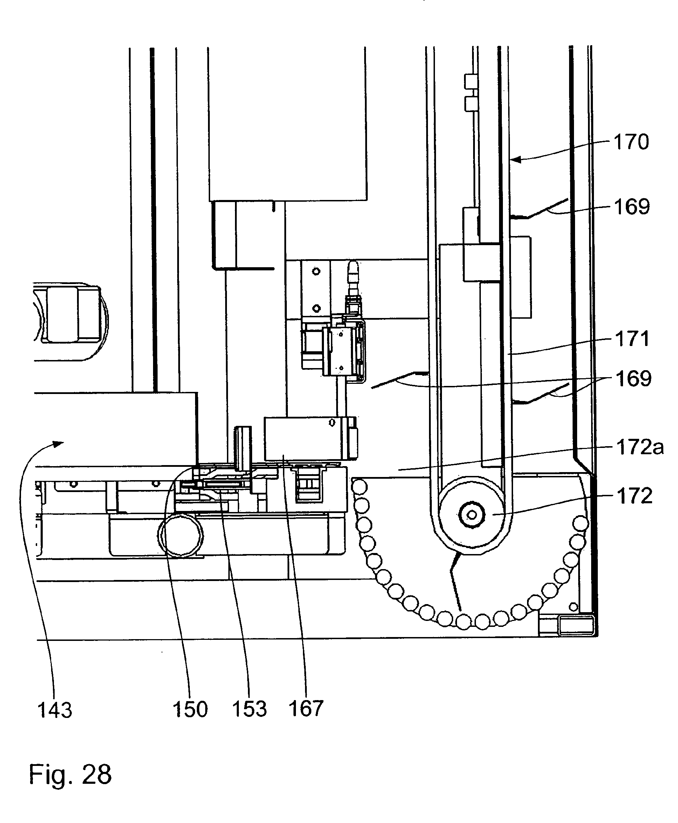

Fig. 17 zeigt die Hub-Fördereinrichtung 170 in einer Abgabestellung. Die Tragrinnen 169 erreichen hierbei am oberen Umkehrpunkt des Endlos-Förderbandes 171 eine Position, in welcher sie oberhalb der Beschickungsöffnung 56 des Backofens 8 angeordnet sind. Eine Beschickungsstellung der Tragrinnen 169, in welcher eine der Tragrinnen 169 dem Ausgabe-Fördertrum 166 zur Aufnahme von Backgut 4 vom Ausgabe-Fördertrum 166 benachbart ist, ist in Fig. 28 dargestellt.

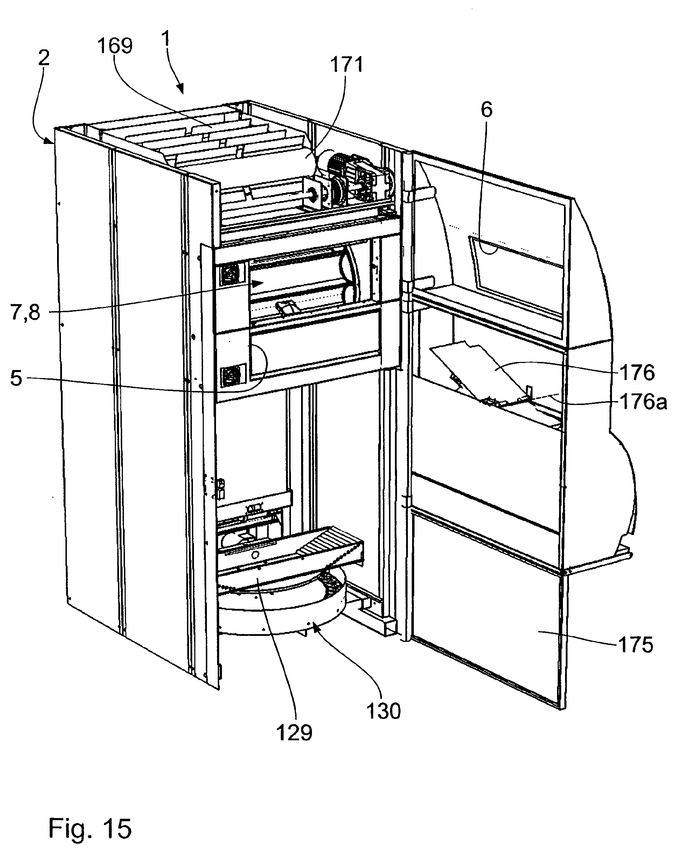

In Fig. 17 links unterhalb der Backtrommel 7 ist eine Ausgaberutsche 173 angeordnet, die hin zur Ausgabeöffnung 5 abfällt. Dieser nachgeordnet ist ein Entnahmebehälter 174 der Backanlage 1 nach den Fig. 14 bis 27. Letzterer ist in einer Fronttür 175 untergebracht, die am Gehäuse 2 schwenkbar um eine vertikale Achse angelenkt ist. Auch das Sichtfenster 6 ist Teil der Fronttür 175. Bei geschlossener Fronttür 175 ist der Ausgabeöffnung 5 ein Weichenelement 176 benachbart (vgl. Fig. 15). Letzteres ist angetrieben um eine horizontal und senkrecht zur Ebene der Fronttür 175 verlaufende Schwenkachse 176a verschwenkbar. In den über die Schwenkstellung vorgebbaren mehreren Weichenstellungen des Weichenelements 176 wird jeweils ein Transportweg vom Backofen 8 hin zu einem dieser Weichenstellungen zugeordneten Entnahmefach 177 des Entnahmebehälters 174 vorgegeben. Insgesamt weist der Entnahmebehälter 174 zwei Entnahmefächer 177 auf, die über sechs Öffnungsklappen zugänglich sind. Im unteren Abschnitt des Entnahmebehälters 174 sind mehrere Brems-Führungselemente 178 angeordnet, deren Funktion noch erläutert wird.

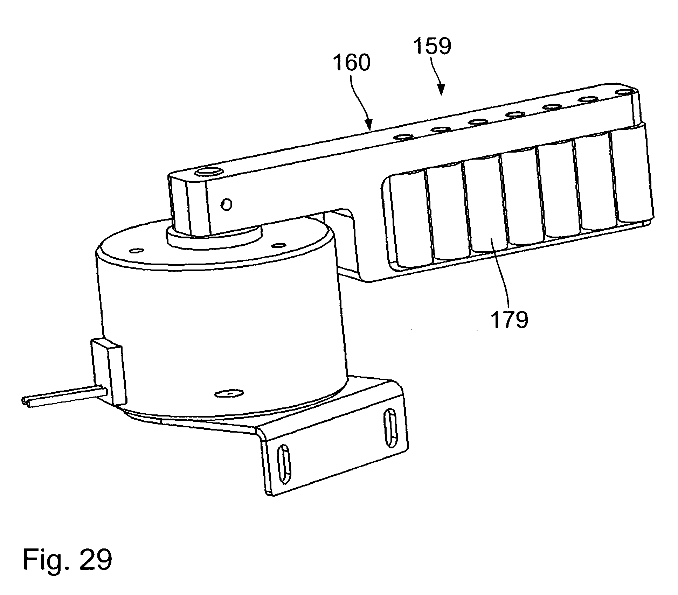

Fig. 29 zeigt den Vereinzelungs-Abweiser 159 im Detail. Die Abweisklappe 160 ist abschnittsweise als Rollenbahn mit einer Mehrzahl von nebeneinander angeordneten und um jeweils eine vertikale Drehachse drehbaren Rollen 179 ausgebildet.

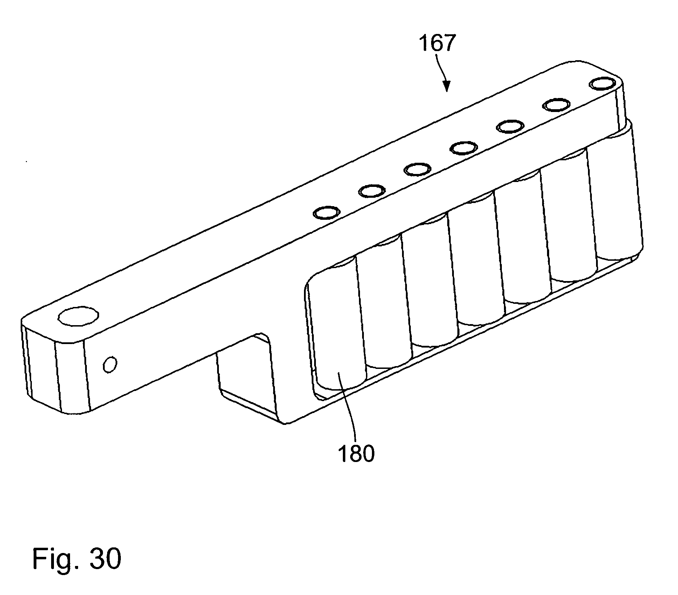

Fig. 30 zeigt den Ausgabeschieber 167 in einer vergrößerten Darstellung. Der Schiebeabschnitt von diesem ist, vergleichbar zur Abweisklappe 160, als Rollenbahn mit einer Mehrzahl von Rollen 180 ausgebildet, die nebeneinander angeordnet sind und um jeweils eine vertikale Drehachse drehbar sind.

Beim Betrieb der Backanlage 1 nach den Fig. 14 bis 27 werden zunächst die Lagerfächer 121 der beiden Behälterträger 117 befüllt. Dabei können die Behälterträger 117 durchaus entfernt von der restlichen Backanlage 1 angeordnet sein. Es können auch mehr als zwei Behälterträger 117 vorhanden sein, deren Inhalt im Wechsel in der Backanlage 1 abgearbeitet wird. Beim Befüllen der Lagerfächer 121 liegen die Ausgabe-Schiebewände 124 in der vollständig heruntergelassenen Stellung vor, so dass die Ausgabeabschnitte der Lagerfächer 121 verschlossen sind. Beim Befüllen wird zunächst die Befüllklappe 122 in die in Fig. 22 gezeigte Offenstellung umgestellt. Nun wird der von der Befüllklappe 122 vorgegebene Befüllraum mit Stücken Backgut gefüllt. Nach dem Befüllen werden die beiden befüllten Behälterträger 117 nebeneinander in eine Position relativ zum Gehäuse 2 der Backanlage 1 verbracht, die der Position in Fig. 16 entspricht. Aufgrund des C-förmigen Tragrahmens und der Dimensionierung der entsprechenden Aufnahme im Gehäuse 2 für den Behälterträger 117 ist dieser, wenn er in die in Fig. 16 gezeigte Beschickungsstellung eingefahren ist, relativ zu den nachgelagerten Förderkomponenten, insbesondere zum Zwischenbehälter 129, ausgerichtet. Anschließend werden die Ausgabe-Schiebewände 124, 125 soweit hochgezogen, dass ein Gebinde von etwa 60 Stücken Backgut 4 aus den Lagerfächern 121 durch den Fallschacht 128 in den Zwischenbehälter 129 fällt.

Beim Befüllen des Zwischenbehälters 129 befindet sich der Zwischenbehälterboden 134 in der in Fig. 23 gezeigten Schließstellung. Nach erfolgtem Befüllen des Zwischenbehälters 129 wird der Zwischenbehälterboden 134 in eine erste Abgabestellung gemäß Fig. 27 verbracht. Ein Teil des im Zwischenbehälter 129 vorliegenden Backguts fällt dann vom Zwischenbehälter 129 in den Förderbehälter 143. Die Abgabestellung wird so gewählt, dass nicht mehr als 25 Stücke Backgut auf einmal in den Förderbehälter 143 gelangen. Anschließend findet mit Hilfe der Vereinzelungseinheit 142 der Bevorratungs-Fördereinrichtung 130 ein Vereinzeln des Backguts statt. Hierzu dreht sich der Innenabschnitt 148 des Behälterbodens 144 entgegen dem Uhrzeigersinn, so dass das Backgut, abgelenkt vom Leitblech 158 innerhalb des Förderbehälters 143 in den Bereich der Eintrittsöffnung 151 des Förderbands 150 gelangt. Dort wird das Backgut vom Förderband 150 bis hin zur Austrittsöffnung 152 gefördert. Damit das Übergeben des Back-Backguts vom Innenabschnitt 148 auf das Förderband 150 im Bereich der Eintrittsöffnung 151 erleichtert ist, kann das Niveau des Förderbands 150 im Bereich der Eintrittsöffnung 151 etwas niedriger sein als das des Innenabschnitts 148. Im Bereich der Austrittsöffnung 152 wiederum kann das Niveau des Förderbands 150 etwas höher sein als das des Innenabschnitts 148. Um im Bereich der Eintrittsöffnung 151 einen Stau des Backguts zu vermeiden, dreht sich der Innenabschnitt 148 immer wieder kurzzeitig auch im Uhrzeigersinn. Überwiegend dreht sich der Innenabschnitt 148 aber entgegen dem Uhrzeigersinn.

Sobald das führende Stück Backgut auf dem Förderband 150 den Vereinzelungssensor 162 passiert hat, aktiviert ein entsprechendes, vom Vereinzelungssensor 162 abgegebenes Signal den Vereinzelungs-Abweiser 159. Die Abweisklappe 160 schwenkt dann von der Durchgangsstellung nach Fig. 24 in die Abweisstellung nach Fig. 25 und weist die dem führenden Stück Backgut nachfolgenden Stücke Backgut vom Förderband 150 ab auf den Innenabschnitt 148. Beim Abweisen rollt das abgewiesene Stück Backgut an den Rollen 179 der Abweisklappe 160 ab. Hierdurch wird das Stück Backgut geschont und ein Verkleben des Backguts an der Abweisklappe 160 verhindert. Wenn das Niveau des Förderbandes 150 im Bereich der Austrittsöffnung 152 etwas höher ist als das des Innenabschnitts 148, wird dieser Abweisvorgang durch Schwerkrafteinfluss noch erleichtert. Auf diese Weise gelangt nur das einzelne, führende Stück Backgut auf dem Förderband 150 durch die Austrittsöffnung 152. Der Durchtritt des führenden Stücks Backgut 4 durch die Austrittsöffnung 152 wird durch die Ablenkrolle 163 und den Begrenzungswandabschnitt 164 erleichtert. Die Ablenkrolle 163 stellt dabei sicher, dass das Backgut in jedem Fall aus dem Bereich der Austrittsöffnung 152 wegtransportiert wird. Mit dem Lichtschrankensensor 165 wird im weiteren Verlauf des Förderbandes 150 kontrolliert, ob tatsächlich die Vereinzelung erfolgreich war, d. h. ob das führende Stück Backgut tatsächlich die Austrittsöffnung 152 durchtreten hat. Hierbei wird überwacht, ob der Lichtschrankensensor 165 während eines vorbestimmten Zeitraums nach dem Umstellen des Vereinzelungs-Abweisers 159 anspricht oder nicht. Wenn die Vereinzelung nicht erfolgreich war, wird der Vereinzelungs-Abweiser 159 wieder in die Durchgangsstellung zurückgestellt und die oben beschriebene Sequenz, beginnend mit dem Ansprechen des Vereinzelungssensors 162 beginnt von neuem. Bei erfolgreicher Vereinzelung wird das führende Stück Backgut weiter auf dem Förderband 150 bis hin zum Ausgabe-Fördertrum 166 transportiert. Beim führenden Stück Backgut 4 ist der Ausgabeschieber 167 in der am weitesten stromabwärts des Förderbands 150 gelegenen Ausgabestellung. Das führende Stück Backgut 4 wird dann vom Ausgabeschieber 167 unter Einfluss der Mitnahmebewegung durch das Förderband 150 und unter Schwerkrafteinfluss hin zu einem Abschnitt der dem Ausgabe-Fördertrum 166 benachbarten Tragrinne 169 überführt, der dem Ausgabeschieber 167 benachbart ist. Bei dieser Ausgabe durch den Ausgabeschieber 167 rollt das vereinzelte Stück Backgut 4 an den Rollen 180 des Ausgabeschiebers 167 ab. Hierdurch wird das Stück Backgut 4 geschont und ein Verkleben von diesem am Ausgabeschieber 167 verhindert. Die Tragrinne 169 ist bei der Ausgabe in einer Beschickungsstellung nahe dem unteren Umkehrpunkt des Förderbandes 171, wie in Fig. 28 dargestellt. Bei der Überführung der vereinzelten Stücke Backgut 4 vom Ausgabe-Fördertrum 166 hin in die Tragrinne 169 durchtritt das Backgut 4 eine Vorratsausgabeöffnung 172a. Letztere ist begrenzt vom Ausgabe-Fördertrum 166 einerseits und vom Endlos-Förderband 171 andererseits.

Während das führende Stück Backgut 4 in die Tragrinne 169 überführt wird, kann schon die Vereinzelung des nächsten Stückes Backgutes 4 mit Hilfe des Vereinzelungs-Abweisers 159 und der Sensoren 162 und 165 erfolgen, wie oben beschrieben. Zum Ausgeben des zweiten Stücks Backgut 4 verfährt der Ausgabeschieber 167 ein Stück weit längs des Ausgabe-Fördertrums 166 stromaufwärts, so dass das nächste vereinzelte Stück Backgut 4 mit dem Ausgabeschieber 167 hin zu einem der Position des ersten vereinzelten Stückes Backgut stromaufwärts benachbarten Abschnitt der Tragrinne 169 abgegeben wird. Dieser Vorgang wiederholt sich nun, während der Ausgabeschieber 167 immer ein weiteres Stück stromaufwärts des Ausgabe-Fördertrums 166 verstellt wird, bis auf der Tragrinne 169 ein Satz von Stücken Backgut 4 vorliegt. Zu einem Satz können zum Beispiel sechs oder acht Stücke Backgut 4 gehören.

Sobald ein derartiger Satz vollständig ist, wird das Endlos-Förderband 171 der Hub-Fördereinrichtung 170 ein Stück weiter bewegt, bis die nächste Tragrinne 169 dem Ausgabe-Fördertrum 166 benachbart vorliegt. Anschließend wird, wie im Zusammenhang mit der ersten, führenden Tragrinne 169 beschrieben, ein zweiter Satz von Stücken Backgut 4 auf der zweiten Tragrinne 169 abgelegt. Dieser Vorgang wiederholt sich, bis alle zehn Tragrinnen 169 mit jeweils einem Satz von Stücken Backgut 4 bestückt sind. Anschließend werden die so bereitgestellten Sätze Backgut mit dem Hub-Förderer 170 längs der Rückwand des Gehäuses 2 nach oben gefördert, bis die erste, führende mit Backgut bestückte Tragrinne 169 eine Position im Bereich der obersten Umlenkwelle 172 der Hub-Fördereinrichtung 170 erreicht hat. Wenn die führende Tragrinne 169 weitertransportiert wird, fällt der dieser zugeordnete Satz von Stücken Backgut 4 durch die geöffnete Beschickungsöffnung 56 und die Durchtrittsöffnung 57 in den obersten Aufnahmeabschnitt 59 des Backofens 8. Sobald dieser Aufnahmeabschnitt 59 mit dem Satz von Stücken Backgut 4 befüllt ist, dreht die innere Begrenzungswand 60 der Backtrommel 7, bis der nächste Aufnahmeabschnitt 59 die Position des gerade Befüllten einnimmt. Sodann wird das Endlos-Förderband 171 wieder solange angetrieben, bis der nächste Satz von Stücken Backgut 4 von der nächsten Tragrinne 169 durch die Beschickungsöffnung 56 und die Durchtrittsöffnung 57 in den nächsten Aufnahmeabschnitt 59 abgeworfen wird. Dieser Vorgang wiederholt sich nun insgesamt noch weitere acht Mal, bis alle zehn Sätze von Stücken Backgut 4 in zehn von elf Aufnahmeabschnitten 59 abgelegt sind. Anschließend wird der Backofen 8 betrieben, wie oben im Zusammenhang mit den Ausführungen nach den Fig. 1 bis 13 beschrieben. Schon während des Backvorgangs kann das Endlos-Förderband 171 wieder so zurückgestellt werden, dass die erste Tragrinne 169 wieder dem Ausgabe-Fördertrum 166 benachbart ist, so dass schon während des Backens eine neue Vereinzelungssequenz, wie oben beschrieben, stattfinden kann.

Nach dem Ende des Backens wird die Backtrommel 7 so gedreht, dass die Durchtrittsöffnung 57 direkt oberhalb der Ausgaberutsche 173 zu liegen kommt. Anschließend wird die Backtrommel 7 entleert, wie oben im Zusammenhang mit der Ausführung nach den Fig. 1 bis 13 beschrieben. Die gebackenen Stücke Backgut 4 fallen durch die Ausgabeöffnung 5 in den Entnahmebehälter 174. Dabei werden sie vom Weichenelement 176 in eines oder in mehrere vorbestimmte Entnahmefächer 177 entleert. Der Fall der gebackenen Stücke Backgut 4 von der Ausgabeöffnung 5 in die Entnahmefächer 177 wird durch mehrere Brems-Führungselemente 178, die im Entnahmebehälter 174 angeordnet sind, so verzögert, dass eine Beschädigung des Backguts 4 ausgeschlossen ist. Das gebackene Backgut steht nun in den Entnahmefächern 177 zur Entnahme bereit. Wenn bei der nächsten Backcharge eine andere Sorte von Backgut gebacken wird, wird das gebackene Backgut 4 über das Weichenelement 176 in andere Entnahmefächer 177 geleitet. Nicht dargestellte Füllstandssensoren, die den einzelnen Entnahmefächern 177 zugeordnet sind, sorgen dafür, dass bei Unterschreiten eines bestimmten Füllstandes in den Entnahmefächern 177 ein erneuter automatischer Backvorgang, wie oben beschrieben, eingeleitet wird.

Die vorstehend beschriebenen Abläufe bei der Backanlage nach den Fig. 14 bis 30 werden von der zentralen Steuereinrichtung gesteuert, entsprechend dem, was oben im Zusammenhang mit den Backanlagen nach den Fig. 1 bis 13 erläutert wurde.

## Patentansprüche

1. Beschickungsvorrichtung für einen Backofen (8)
- mit mindestens einer Bevorratungseinrichtung (9; 75; 116) für Backgut (4), welche umfasst
-- eine Vorrats-Beschickungsöffnung (3; 77),
-- mindestens einen Vorratsbehälter (10, 23; 76; 121),
-- eine unterhalb der Vorrats-Beschickungsöffnung (3; 77) im Bereich eines Bodens der Bevorratungseinrichtung (9; 75; 116) angeordneten Vorrats-Ausgabeöffnung (32a; 99; 169a),
- mit einer Hub-Fördereinrichtung (34; 170) für Backgut (4), welche umfasst
-- einen untenliegenden Förder-Eingangsabschnitt (37), welcher mit der Vorrats-Ausgabeöffnung (32a; 169a) der Bevorratungseinrichtung (9; 75; 116) derart in Förderverbindung steht, dass das Backgut (4) von der Vorrats-Ausgabeöffnung (32a; 99; 169a) hin zum Förder-Eingangsabschnitt (37) zumindest auch unter Schwerkrafteinfluss gefördert wird,
-- eine angetriebene Hub-Fördereinheit (35; 171) zwischen dem Förder-Eingangsabschnitt (37) und einem Förder-Ausgangsabschnitt (43).

2. Beschickungsvorrichtung nach Anspruch 1, **dadurch gekennzeichnet, dass** die Bevorratungseinrichtung (9; 75; 116) eine Mehrzahl von Vorratsbehältern (10, 23; 76; 121) aufweist, die derart miteinander in Förderverbindung stehen, dass das Backgut (4) hin zu einem untenliegenden Vorratsbehälter (23; 100; 143) unter Schwerkrafteinfluss gefördert wird.

3. Beschickungsvorrichtung nach Anspruch 1 oder 2, **dadurch gekennzeichnet, dass** die Bevorratungseinrichtung (9; 75; 116) eine angetriebene Bevorratungs-Fördereinrichtung (28, 29; 98; 130) zur Förderung des Backguts (4) hin zur Vorrats-Ausgabeöffnung (32a; 99; 169a) und insbesondere zum Vereinzeln des Backguts (4) umfasst.

4. Beschickungsvorrichtung nach einem der Ansprüche 1 bis 3, **dadurch gekennzeichnet, dass** mindestens ein Vorratsbehälter (10, 23) zylindrisch geformt ist und in eine Mehrzahl von Vorratssektoren (15 bis 18) unterteilt ist.

5. Beschickungsvorrichtung nach Anspruch 4, **dadurch gekennzeichnet, dass** radial verlaufende Trennwände (11 bis 14, 24, 25), welche die Vorratssektoren ( 15 bis 18) voneinander trennen, um eine zentrale Längsachse des Vorratsbehälters (10, 23) drehbar angetrieben sind.

6. Beschickungsvorrichtung nach einem der Ansprüche 1 bis 5, **dadurch gekennzeichnet, dass** mindestens ein Vorratsbehälter (10; 121) austauschbar gehaltert ist.

7. Beschickungsvorrichtung nach einem der Ansprüche 1 bis 6, **dadurch gekennzeichnet, dass** die Hub-Fördereinheit (35) als Förderschnecke ausgebildet ist, wobei Gewindegänge (36) der Förderschnecke (35) einen Abstand zueinander aufweisen, der einer typischen Ausdehnung eines Stücks Backgut (4) entspricht.

8. Beschickungsvorrichtung nach einem der Ansprüche 1 bis 7, **gekennzeichnet durch** eine Positioniereinrichtung (47) für einen Satz Backgut (4), welche umfasst
- einen Zugabeabschnitt (44), welcher mit dem Förder-Ausgangsabschnitt (43) der Hub-Fördereinrichtung (34) derart in Förderverbindung steht, dass das Backgut (4) vom Förder-Ausgangsabschnitt (43) hin zum Zugabeabschnitt (44) unter Schwerkrafteinfluss gefördert wird,
- eine Positioniereinheit (48), welche Einzelpositionen von Backgut-Stücken eines Satzes Backgut (4) vorgibt,
- einen Ausgabeabschnitt (48), welcher mit einer Beschickungsöffnung (56) des Backofens (8) derart in Förderverbindung steht, dass das Backgut (4) vom Ausgabeabschnitt (48) hin zu einem unterhalb der Beschickungsöffnung (56) liegenden Aufnahmeabschnitt (59) des Backofens (8) für den Satz Backgut (4) unter Schwerkrafteinfluss und unter Beibehaltung der relativen Einzelpositionen der Backgut-Stücke des Satzes Backgut (4) gefördert wird.

9. Beschickungsvorrichtung nach Anspruch 8, **dadurch gekennzeichnet, dass** die Positioniereinheit (48) als Positionierrahmen mit einer Mehrzahl von Positionieraufnahmen (49) für jeweils ein Stück Backgut (4) ausgebildet ist.

10. Beschickungsvorrichtung nach Anspruch 8 oder 9, **dadurch gekennzeichnet, dass** die Positioniereinheit (48) über einen Antriebsmotor (55) derart angetrieben ist, dass sie umgestellt werden kann zwischen einer Positionierstellung, in welcher die Stücke Backgut (4) eines Satzes Backgut (4) vom Zugabeabschnitt in Einzelpositionen vereinzelt werden, und einer Übergabestellung, in welcher die Positioniereinheit (48) mit der Beschickungsöffnung (56) des Backofens (8) in Förderverbindung steht.

11. Beschickungsvorrichtung nach Anspruch 10, **dadurch gekennzeichnet, dass** der Antriebsmotor (55) die Positioniereinheit (48) in der Positionierstellung zwischen Einzel-Positionierstellungen verlagert, in welchen vorzugsweise jeweils eine Positionieraufnahme (49) dem Zugabeabschnitt (44) zur Übergabe eines Stückes Backgut (4) zugeordnet ist.

12. Beschickungsvorrichtung nach einem der Ansprüche 1 bis 11, **dadurch gekennzeichnet, dass** die Bevorratungseinrichtung (75; 116) eine Mehrzahl von individuell gesteuert entleerbaren Vorratsbehältern (76; 121) aufweist, die insbesondere etagenweise übereinander angeordnet sind.

13. Beschickungsvorrichtung nach Anspruch 12, **dadurch gekennzeichnet, dass** jedem Vorratsbehälter (76) eine gesteuert zwischen einer Offen- und einer Schließstellung verlagerbare Ausgabeklappe (85) zugeordnet ist, wobei letztere insbesondere in der Schließstellung vorgespannt ist.

14. Beschickungsvorrichtung nach einem der Ansprüche 1 bis 13, **dadurch gekennzeichnet, dass** der Boden (78a; 123) eines Vorratsbehälters (76; 121) als Rollenbahn ausgeführt ist.

15. Beschickungsvorrichtung nach einem der Ansprüche 3 bis 14, **dadurch gekennzeichnet, dass** die Bevorratungs-Fördereinrichtung (98; 130) zur Förderung des Backguts (4) hin zur Vorrats-Ausgabeöffnung (99; 169a) umfasst:
- einen Förderbehälter (100; 143) mit einem Behälterboden (103; 144), der unterteilt ist in einen runden Innenabschnitt (105; 148) und in einen diesen zumindest teilweise umgebenden, insbesondere ringförmigen Außenabschnitt (106; 149),
- wobei der Außenabschnitt (106; 149) relativ zum Innenabschnitt (105; 148) um eine senkrecht auf der Behälterbodenebene stehende Rotationsachse (107) drehantreibbar ist und mit der Vorrats-Ausgabeöffnung (99; 169a) in Förderverbindung steht.

16. Beschickungsvorrichtung nach Anspruch 15, **dadurch gekennzeichnet, dass** der Innenabschnitt (105; 148) unabhängig vom Außenabschnitt (106; 149) um die Rotationsachse (107) drehantreibbar ist.

17. Beschickungsvorrichtung nach Anspruch 15 oder 16, **dadurch gekennzeichnet, dass** der Förderbehälter (100; 143) ein starres Leitblech (110; 158) aufweist, welches derart geformt ist, dass aufgrund einer Relativbewegung zwischen dem Leitblech (110; 158) und dem Innenabschnitt (105; 148) Backgut (4), welches zunächst auf dem Innenabschnitt (105; 148) liegt, zum Außenabschnitt (106; 149) abgelenkt wird.

18. Beschickungsvorrichtung nach einem der Ansprüche 15 bis 17, **dadurch gekennzeichnet, dass** der Innenabschnitt (105; 148) um die Rotationsachse (107) mit wechselndem Drehsinn antreibbar ist.

19. Beschickungsvorrichtung nach einem der Ansprüche 1 bis 18, **gekennzeichnet durch** einen Sensor (115; 162; 165), insbesondere eine Lichtschranke, zum Zählen der geförderten Stücke Backgut (4).

20. Beschickungsvorrichtung nach einem der Ansprüche 1 bis 19, **dadurch gekennzeichnet, dass** die Bevorratungseinrichtung (116) mindestens einen fahrbaren Behälterträger (117) umfasst.

21. Beschickungsvorrichtung nach Anspruch 20, **gekennzeichnet durch** eine Dimensionierung einer Aufnahme für den fahrbaren Behälterträger (117) derart, dass bei in Beschickungsstellung eingefahrenem Behälterträger (117) dieser relativ zu den nachgelagerten Förderkomponenten der Beschickungsvorrichtung ausgerichtet ist.

22. Beschickungsvorrichtung nach einem der Ansprüche 1 bis 21 unter Rückbeziehung auf Anspruch 12, **dadurch gekennzeichnet, dass** mindestens einem Vorratsbehälter (121) eine gesteuert zwischen einer Offen- und einer Schließstellung verlagerbare Ausgabe-Schiebewand (124, 125) zugeordnet ist.

23. Beschickungsvorrichtung nach Anspruch 22, **dadurch gekennzeichnet, dass** die Ausgabe-Schiebewand (124, 125) als aufrollbare Gelenkgliederwand ausgestaltet ist.

24. Beschickungsvorrichtung nach Anspruch 22 oder 23, **dadurch gekennzeichnet, dass** die Ausgabe-Schiebewand (124, 125) einer Mehrzahl von Vorratsbehältern (121), zugeordnet ist.

25. Beschickungsvorrichtung nach einem der Ansprüche 1 bis 24 unter Rückbeziehung auf Anspruch 3, **dadurch gekennzeichnet, dass** im Förderweg zwischen mindestens einem Vorratsbehälter (121) und der Bevorratungs-Fördereinrichtung (130) ein Zwischenbehälter (129) vorgesehen ist, der derart ausgestaltet ist, dass aus dem Zwischenbehälter (129) eine Teilmenge von Backgut (4) an die nachgelagerten Komponenten der Bevorratungs-Fördereinrichtung (130) abgegeben wird.

26. Beschickungsvorrichtung nach Anspruch 25, **dadurch gekennzeichnet, dass** der Zwischenbehälter (129) eine in ihrer Weite einstellbare Abgabeöffnung (141) aufweist.

27. Beschickungsvorrichtung nach Anspruch 26, **dadurch gekennzeichnet, dass** der Zwischenbehälter (129) einen um eine außermittige Achse (136) zwischen mindestens einer Offen- und Schließstellung verstellbaren und in der jeweiligen Stellposition die Weite der Abgabeöffnung (141) vorgebenden Zwischenbehälterboden (134) aufweist.

28. Beschickungsvorrichtung nach einem der Ansprüche 1 bis 27 unter Rückbeziehung auf die Ansprüche 15 bis 19, **dadurch gekennzeichnet, dass** die Bevorratungs-Fördereinrichtung (130) einen als Förderband (150), insbesondere als Schuppenband, ausgeführten Außenabschnitt (149) aufweist.

29. Beschickungsvorrichtung nach einem der Ansprüche 1 bis 28 unter Rückbeziehung auf die Ansprüche 15 bis 19, **gekennzeichnet durch** einen Vereinzelungs-Abweiser (159), der mit mindestens einem Vereinzelungssensor (162) zusammenarbeitet und abhängig von einem Signal des Vereinzelungssensors (162) die einem ersten, auf dem Außenabschnitt (149) geförderten Stück Backgut (4) folgenden Stücke Backgut (4) vom Außenabschnitt (149) zurück auf den Innenabschnitt ( 148) befördert.

30. Beschickungsvorrichtung nach Anspruch 29, **gekennzeichnet durch** einen dem Vereinzelungs-Abweiser (159) in Förderrichtung des Außenabschnitts (149) nachgelagerten weiteren Sensor (165) zur Erfassung von auf dem Außenabschnitt (149) nach dem Vereinzelungs-Abweiser (159) geförderten Stücken Backgut (4).

31. Beschickungsvorrichtung nach Anspruch 29 oder 30, **dadurch gekennzeichnet, dass** die Bevorratungs-Fördereinrichtung (130) einen Ausgabeschieber (167) aufweist, der einem Ausgabe-Fördertrum (166) des Außenabschnitts (149) nach dem Vereinzelungs-Abweiser (159) zugeordnet ist und Backgut (4) quer zur Förderrichtung des Ausgabe-Fördertrums (166) von diesem hin zum Förder-Eingangsabschnitt (169a) der Hub-Fördereinrichtung (170) fördert.

32. Beschickungsvorrichtung nach einem der Ansprüche 1 bis 31, **gekennzeichnet durch** eine Positioniereinrichtung (167; 169) für einen Satz Backgut (4), welche umfasst:
- einen Zugabeabschnitt (169), welcher mit einem Förder-Ausgabeabschnitt (166) der Bevorratungs-Fördereinrichtung (130) derart in Förderverbindung steht, dass das Backgut vom Förder-Ausgabeabschnitt (166) hin zum Zugabeabschnitt (169) unter Schwerkrafteinfluss gefördert wird,
- eine Positioniereinheit (167), welche Einzelpositionen von Backgut-Stücken (4) eines Satzes Backgut vorgibt,
- wobei der Zugabeabschnitt (169) Teil der Hub-Fördereinrichtung (170) ist.

33. Beschickungsvorrichtung nach Anspruch 31 oder 32, **dadurch gekennzeichnet, dass** der Ausgabeschieber (167) die Positioniereinheit darstellt, wobei er zur Bereitstellung des Satzes von Backgut (4) längs des Ausgabe-Fördertrums (166) verstellbar ist.

34. Beschickungsvorrichtung nach einem der Ansprüche 1 bis 33, **dadurch gekennzeichnet, dass** die Hub-Fördereinrichtung (170) als ein um horizontal angeordnete Umlenkwellen (172) umlaufendes angetriebenes Endlos-Förderband (171) ausgebildet ist, wobei an der Außenseite des Endlos-Förderbandes (171) Tragrinnen (169) für jeweils einen Satz Backgut (4) angebracht sind, so dass die Tragrinnen (16) die Zugabeabschnitte der Positioniereinrichtung (167, 169) darstellen.

35. Backanlage (1) mit einer Beschickungsvorrichtung nach einem der Ansprüche 1 bis 34 und einem Backofen (8).

36. Backanlage nach Anspruch 35, **gekennzeichnet durch** einen dem Backofen (8) nachgelagerten Entnahmebehälter (174), der ein Weichenelement (176) aufweist, welches in mindestens zwei Weichenstellungen umstellbar ist, wobei das Weichenelement (176) in jeder Weichenstellung einen Transportweg für Backgut (4) vom Backofen (8) hin zu einem der Weichenstellung zugeordneten Entnahmefach (177) des Entnahmebehälters (174) vorgibt.
